# EUROPEAN PATENT APPLICATION

(11) **EP 4 725 290 A1**
(43) Date of publication of application: **15.04.2026**
(21) Application number: 24822540.1
(22) Date of filing: 29.05.2024
(51) Int. Cl.: A01D 43/063, A01D 43/08, A01D 34/82

(54) **MOWER**

(30) Priority: 12.06.2023 CN 202321489878 U; 25.07.2023 CN 202310919511; 25.07.2023 CN 202321980762 U; 15.08.2023 CN 202311023605; 15.08.2023 CN 202322201560 U; 04.09.2023 CN 202311134602; 04.09.2023 CN 202322391725 U; 05.09.2023 CN 202311136053; 05.09.2023 CN 202322409523 U; 05.09.2023 CN 202311134707; 05.09.2023 CN 202322411514 U; 06.09.2023 CN 202311148312; 06.09.2023 CN 202322427058 U; 06.09.2023 CN 202322423791 U
(71) Applicant: Greenworks (Jiangsu) Co., Ltd., Changzhou, Jiangsu 213023 (CN)
(72) Inventor: HE, Yaoting, hangzhou, Jiangsu 213023 (CN); FENG, Shouchuan, hangzhou, Jiangsu 213023 (CN); WANG, Yu, hangzhou, Jiangsu 213023 (CN); JIANG, Feng, hangzhou, Jiangsu 213023 (CN); DONG, Jianhua, hangzhou, Jiangsu 213023 (CN); PENG, Jianjun, hangzhou, Jiangsu 213023 (CN); HUANG, Wei, hangzhou, Jiangsu 213023 (CN); ZHANG, Lin, hangzhou, Jiangsu 213023 (CN); WEI, Changcun, hangzhou, Jiangsu 213023 (CN)
(74) Representative: Bergenstråhle & Partners AB
(86) International application number: PCT/CN2024/095936
(87) International publication number: WO 2024/255588

(57) **Abstract**

A mower includes a casing, a door assembly, and a knob assembly. The casing is provided with a cutting cavity and a connecting port. The door assembly is pivotally connected with the casing. When the door assembly is in an open position, the cutting cavity is connected with the connecting port, and the mower is in a lawn collection mode. When the door assembly is in a closed position, the connecting port is closed, and the mower is in a lawn mulching mode. The knob assembly is connected with the door assembly and can drive the door assembly to move. When the locking component is in a locked state, the knob assembly cannot rotate. When the locking component is in an activated state, the knob assembly can rotate. A rotating axis of the locking component is substantially perpendicular to a rotating axis of the knob assembly.

## Description

### TECHNICAL FIELD

The disclosure relates a technical field of garden tools, especially relates to a mower.

### BACKGROUND

To adapt to different conditions, conventional mowers are often provided with stop blocks, and the different modes of the mowers can be switched by removing the stop blocks. However, after the stop blocks are removed, they cannot be stored properly, so the stop blocks are often lost.

In view of this, it is necessary to improve the conventional mowers to solve the problems mentioned above.

### SUMMARY

The disclosure provides a mower that solves a problem of easy loss of stop blocks.

One or more embodiment of the disclosure provide the mower. The mower has a lawn mulching mode and a lawn collection mode and includes a casing, a door assembly and a knob assembly.

The casing is provided with a cutting cavity and a connecting port.

The door assembly is pivotally connected with the casing. When the door assembly is in an open position, the cutting cavity is connected with the connecting port, the mower is in the lawn collection mode, and when the door assembly is in a closed position, the connecting port is closed, and the mower is in the lawn mulching mode.

The knob assembly is connected with the door assembly and capable of driving the door assembly to move.

Wherein, the knob assembly further includes a locking component with a locked state and an activated state, when the locking component is in the locked state, the knob assembly is non-rotatable, when the locking component is in the activated state, the knob assembly is rotatable, and a rotating axis of the locking component is substantially perpendicular to a rotating axis of the knob assembly.

As a further improvement of the disclosure, the knob assembly includes a knob base and a knob cover, a first end of the locking component is accommodated in an accommodating cavity between the knob base and the knob cover, a second end of the locking component abuts against an outer wall surface of the casing and is rotatable along the outer wall surface, the outer wall surface of the casing is provided with at least two locking grooves on a rotation path of the locking component, when the second end of the locking component is accommodated in one of the at least the two locking groove, the locking component is in the locked state, the knob assembly is non-rotatable, and when the knob cover is pressed, the first end of the locking component moves toward the knob base, the second end of the locking component disengages from the one of the at least the two locking groove, the locking component is in the activated state, and the knob assembly rotatable.

**As** a further improvement of the disclosure, the locking component is substantially V-shaped and includes a first locking arm, a second locking arm, and a connecting arm connecting the first locking arm with the second locking arm, the first locking arm is accommodated in the accommodating cavity and abuts against the knob cover, the connecting arm is connected with the knob base through a rotating shaft, and the second locking arm is accommodated in the one of the at least the two locking groove.

**As** a further improvement of the disclosure, the knob assembly further includes an elastic component arranged in the accommodating cavity, in a vertical direction, the first locking arm is clamped by the knob cover and the elastic component, when the knob cover is pressed, the first locking arm is pushed to compress the elastic component, the second locking arm tilts upward to be disengaged from the one of the at least the two locking groove, the knob assembly is in a rotatable state, and after a pressure is released, the elastic component drives the first locking arm to reset, the second locking arm is accommodated in the one of the at least the two locking groove, and the knob assembly is in the locked state.

**As** a further improvement of the disclosure, an inner side wall of the knob cover is provided with a positioning strip protruding toward the first locking arm, a side of the first locking arm facing the knob cover is correspondingly concave to define a positioning groove, and the positioning strip extends into the positioning groove and abuts against the first locking arm in real time.

**As** a further improvement of the disclosure, the knob base is provided with a positioning part at an end away from the locking groove and a positioning shaft passing through the positioning part, the knob cover is provided with an accommodating groove to accommodate the positioning part, a fourth perforation hole is opened on a side wall of the knob cover, and the fourth perforation hole is communicated with the accommodating groove to allow the positioning shaft to pass through, so that the knob cover is rotatably connected with the knob base.

**As** a further improvement of the disclosure, the casing is provided with a passing hole for the door assembly to pass through, and the door assembly passes through the passing hole and is fixedly connected with the knob assembly so as to rotate synchronously with the knob assembly.

**As** a further improvement of the disclosure, the door assembly includes a transmission shaft and a stop block connected with the transmission shaft, and the transmission shaft passes through the passing hole and is fixedly connected with the knob assembly.

**As** a further improvement of the disclosure, the mower further includes a guiding plate fixedly connected with the casing, the guiding plate is provided with a guiding surface and a through hole, the guiding surface is accommodated inside the casing, the through hole is exposed outside the casing, and the transmission shaft passes through the through hole and is rotatable along the guiding surface.

**As** a further improvement of the disclosure, the casing is further provided with a first positioning block fixedly connected with the guiding plate, a first end of the transmission shaft passes through the through hole to be exposed outside the casing, and a second end of the transmission shaft is fixedly connected with the first positioning block to realize a fixed connection between the door assembly and the casing.

**As** a further improvement of the disclosure, an opening is arranged at a bottom of the casing to form a cutting cavity, the connecting port is arranged on a side wall of the casing, the casing is further provided with a lawn collection channel communicated with the connecting port, and the mower further includes a cutting assembly and a lawn collection bag.

**The** cutting assembly is accommodated in the cutting cavity and capable of rotating in the cutting cavity.

**The** lawn collection bag is detachably fixed to a rear side of the casing and communicated with the cutting cavity through the lawn collection channel and the connecting port.

Wherein, the door assembly is provided with a first curved surface and a second curved surface on a side facing the cutting assembly, when the door assembly blocks the connecting port, the first curved surface is coplanar with an inner wall surface of the cutting cavity and the first curved surface and the cutting cavity together define a cavity passage for the cutting assembly to rotate, so as to enable lawn clippings cut by the cutting assembly to be discharged from the bottom of the casing, when the door assembly rotates to expose the connecting port, the second curved surface is located in the lawn collection channel and is coplanar with an inner wall surface of the lawn collection channel, so as to enable the lawn clippings cut by the cutting assembly to be guided into the lawn collection bag through the connecting port, the second curved surface and the lawn collection channel.

As a further improvement of the disclosure, the first curved surface and the second curved surface are vertically offset, and at least one end of the first curved surface and the second curved surface share a common edge.

As a further improvement of the disclosure, the first curved surface is an arc surface, and a radius of curvature of the first curved surface is the same as a radius of curvature of an inner wall surface of the cutting cavity, and the second curved surface is a single curved surface.

As a further improvement of the disclosure, in the vertical direction, the first curved surface is at a same height as the cutting assembly, and the second curved surface is located above the cutting assembly.

As a further improvement of the disclosure, in the vertical direction, a height of the first curved surface is one-fifth to one-quarter of a height of the second curved surface.

Beneficial effects of the disclosure are as follows: the mower of the disclosure is provided with a door assembly pivotally connected on the casing, and the knob assembly is connected with the door assembly, so that a rotation of the knob assembly may drive the door assembly to move. In addition, through setting the locking component of the knob assembly to have the locked state and the activated state, the knob assembly cannot rotate when the locking component is in the locked state, and the knob assembly can rotate when the locking component is in the activated state, so that the mower can be switched between the lawn collection mode and the lawn mulching mode, which is simple to operate and easy to use.

### BRIEF DESCRIPTION OF THE DRAWINGS

FIG. 1 is a schematic structural view of a mower according to at least one embodiment of the disclosure.
FIG. 2 is a schematic structural view of a mower in FIG. 1 from another angle.
FIG. 3 is a schematic view of a lawn collection bag and a door assembly in FIG. 2 after disassembling.
FIG. 4 is a schematic view of a door assembly in FIG. 2 after disassembling.
FIG**.** 5 is a assembling schematic structural view of a door assembly, a knob assembly and a casing in FIG. 1.
FIG. 6 is an exploded view of FIG. 5.
FIG. 7 is an exploded view of a knob assembly in area H in FIG. 6.
FIG. 8 is an exploded view of a base, a guiding plate and a door assembly in FIG. 6.
FIG. 9 is an exploded view of a first positioning block, a guiding plate and a rear blocking plate in FIG. 6.
FIG. 10 is an exploded view of a a guiding plate and a door assembly in FIG. 6.
FIG. 11 is a cross-sectional view of a knob assembly in FIG. 5.
FIG. 12 is an exploded view of a mower in FIG. 1 from another angle.
FIG. 13 is another schematic structural view of a mower according to at least one embodiment of the disclosure.
FIG. 14 is a schematic structural view of a handle in FIG. 13 is in an extended state.
FIG. 15 is a schematic structural view of a handle in FIG. 13 is in a retracted state.
FIG. 16 is an exploded view of a handle in FIG. 15.
FIG. 17 is an exploded view of an upper rod assembly in FIG. 16.
FIG. 18 is a schematic structural view of a lower rod assembly in FIG. 16.
FIG. 19 is a schematic structural view of a locking assembly in FIG. 16.
FIG. 20 is an exploded view of a locking assembly in FIG. 19.
FIG. 21 is a schematic view of FIG. 20 from another angle.
FIG. 22 is perspective view of a mower according to at least one embodiment of the disclosure.
FIG. 23 is a perspective view of a casing and a power head in FIG. 22 after assembling.
FIG. 24 is a perspective view of FIG. 23 from another angle.
FIG. 25 is a schematic view of FIG. 23 after removing a top cover.
FIG. 26 is an exploded view of FIG. 25.
FIG. 27 is a perspective view of a casing in FIG. 26.
FIG. 28 is a perspective view of a casing in FIG. 27 from another angle.
FIG. 29 is a perspective view of a volute in FIG. 26.
FIG. 30 is a perspective view of a power head in FIG. 26.
FIG. 31 is a perspective view of a power head in FIG. 30 from another angle.
FIG. 32 is a flowing schematic view of external airflow.
FIG. 33 is another perspective view of a power head in FIG. 30 from another angle.
FIG. 34 is a schematic structural view of a power head according to at least one embodiment of the disclosure.
FIG. 35 is an exploded view of a power head casing in FIG. 34.
FIG. 36 is an exploded view of a first housing in FIG. 34.
FIG. 37 is a partial enlarged view of FIG. 36.
FIG. 38 is an exploded view of FIG. 35 after removing the power head casing.
FIG. 39 is a schematic structural view of a battery pack cavity in FIG. 38.
FIG. 40 is an exploded view of a battery pack cavity and a motor in FIG. 35.
FIG. 41 is an exploded view of a cover and an installation belt in FIG. 34.
FIG. 42 is a schematic structural view of a power head in FIG. 34 from another angle.
FIG. 43 is an exploded view of a flip cover locking device in FIG. 42.
FIG. 44 is perspective structural view of a motor according to at least one embodiment of the disclosure.
FIG. 45 is an exploded view of a motor in FIG. 44.
FIG. 46 is a partial enlarged view of part A in FIG. 45.
FIG. 47 is a perspective schematic view of a fourth housing in FIG. 45.
FIG. 48 is an exploded view of a motor in FIG. 44 from another angle.
FIG. 49 is a partial enlarged view of part B in FIG. 48.
FIG. 50 is a partial enlarged view of part C in FIG. 48.
FIG. 51 is a cross-sectional view of a motor in FIG. 44.
FIG. 52 is a partial enlarged view of part D in FIG. 51.
FIG. 53 is a perspective schematic structural view of a mower according to at least one embodiment of the disclosure.
FIG. 54 is an assembling exploded view of a blade fixing structure of a mower in FIG. 53.
FIG. 55 is a schematic view of a blade fixing structure in FIG. 53 after assembling.
FIG. 56 is a perspective schematic structural view of a first blade in FIG. 55.
FIG. 57 is a perspective schematic structural view of a second blade in FIG. 55.
FIG. 58 is a perspective schematic structural view of a third connecting component in FIG. 55.
FIG. 59 is a partial enlarged view of circle E in FIG. 58.
FIG. 60 is a schematic view of a third connecting component in FIG. 58 from another angle.
FIG. 61 is a cross-sectional view of a blade fixing structure of a mower in FIG. 55.
FIG. 62 is a cross-sectional view of a shaft sleeve in FIG. 60.

### DETAILED DESCRIPTION

To enable objectives, technical solutions, and advantages of this disclosure to be clearer, the disclosure will be described in detail below with reference to accompanying drawings and specific embodiments.

The disclosure provides a mower 1. The mower 1 has a lawn collection mode and a lawn mulching mode, and can be switched between these two modes at will to meet needs of processing cut lawn clippings in different conditions.

The mower 1 of the disclosure will now be described in conjunction with specific embodiments.

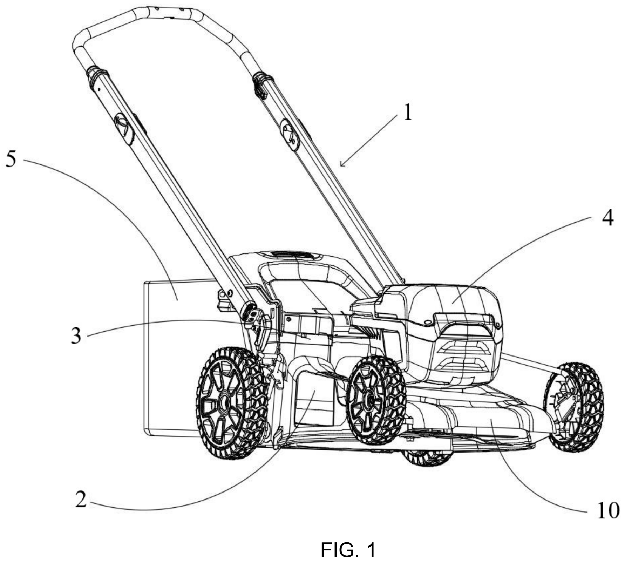

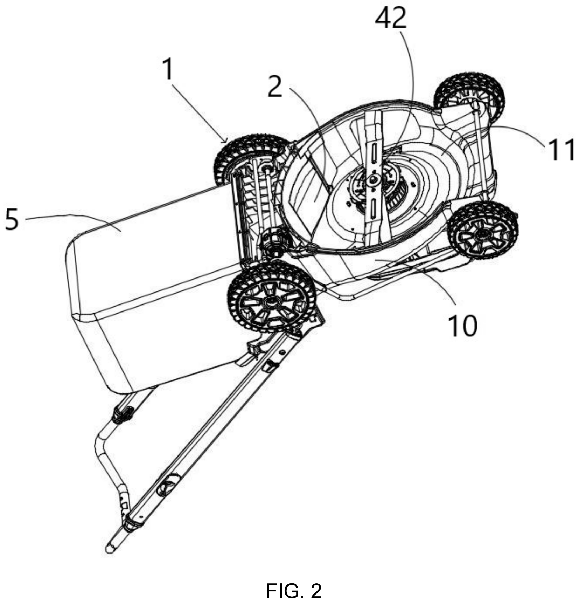

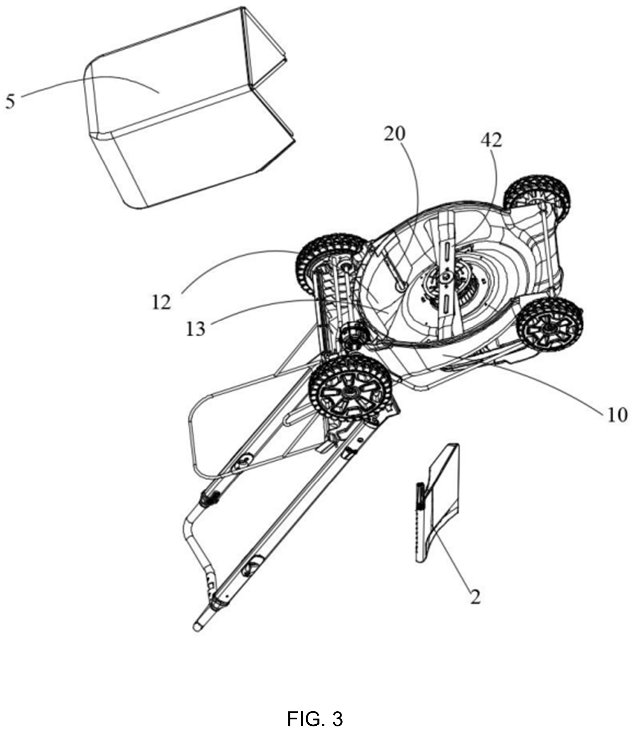

Please refer to FIG. 1 through FIG. 4. The disclosure provides the mower 1, and the mower 1 includes a casing 10, a door assembly 2, a knob assembly 3, a cutting assembly 4 and a lawn collection bag 5. Wherein, a bottom of the casing 10 is provided with an opening to form a cutting cavity 11. A connecting port 12 is arranged on a side wall of the casing 10, and the cutting cavity 11 is communicated with the connecting port 12. In addition, the casing 10 is further provided with a lawn collection channel 13 communicated with the connecting port 12. The cutting assembly 4 is partially accommodated in the cutting cavity 11 and can rotate in the cutting cavity 11. The lawn collection bag 5 is detachably fixed to a rear side of the casing 10 and communicated with the cutting cavity 11 through the lawn collection channel 13 and the connecting port 12. The door assembly 2 is pivotally connected with the casing 10 to cover or expose the connecting port 12. When the door assembly 2 is in an open position, the cutting cavity 11 is connected with the connecting port 12, and the mower 1 is in the lawn collection mode. When the door assembly 2 is in a closed position, the connecting port 12 is closed, and the mower 1 is in the lawn mulching mode.

As can be seen, the connecting port 12 may be covered or exposed by rotating the door assembly 2, so that the mower 1 can be switched between lawn collection mode and lawn mulching mode.

The knob assembly 3 is used to drive the door assembly 2 to rotate relative to the connecting port 12, so as to cover or expose the connecting port 12.

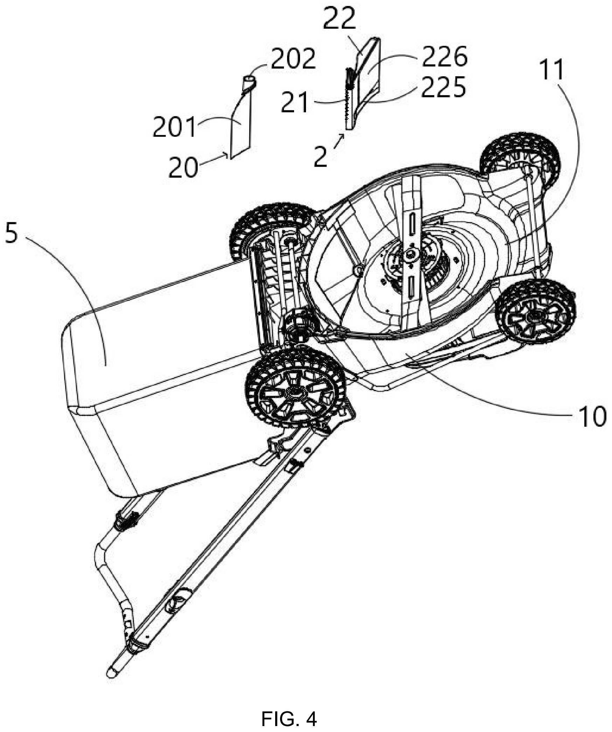

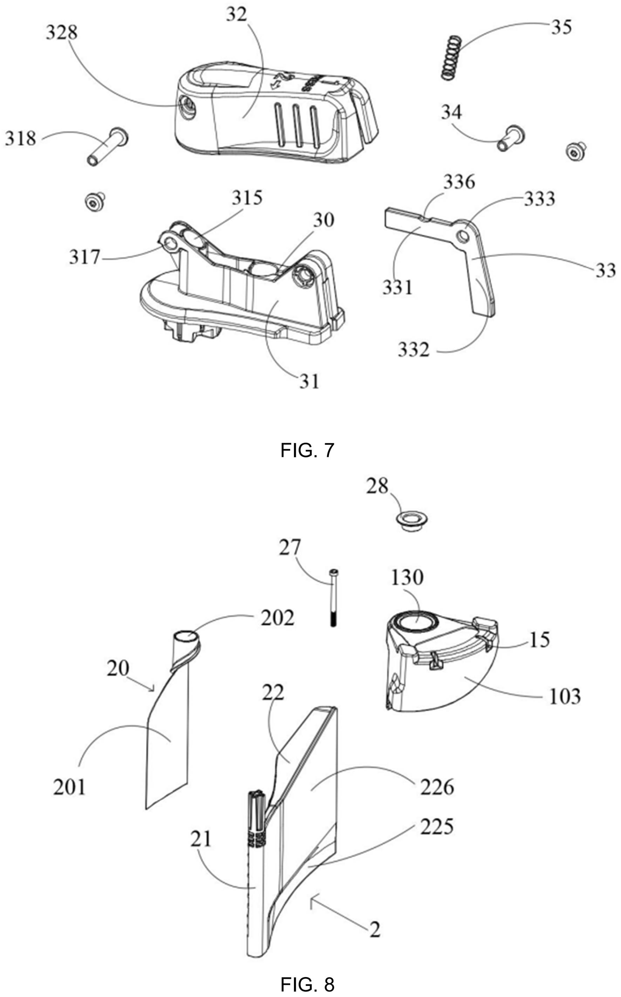

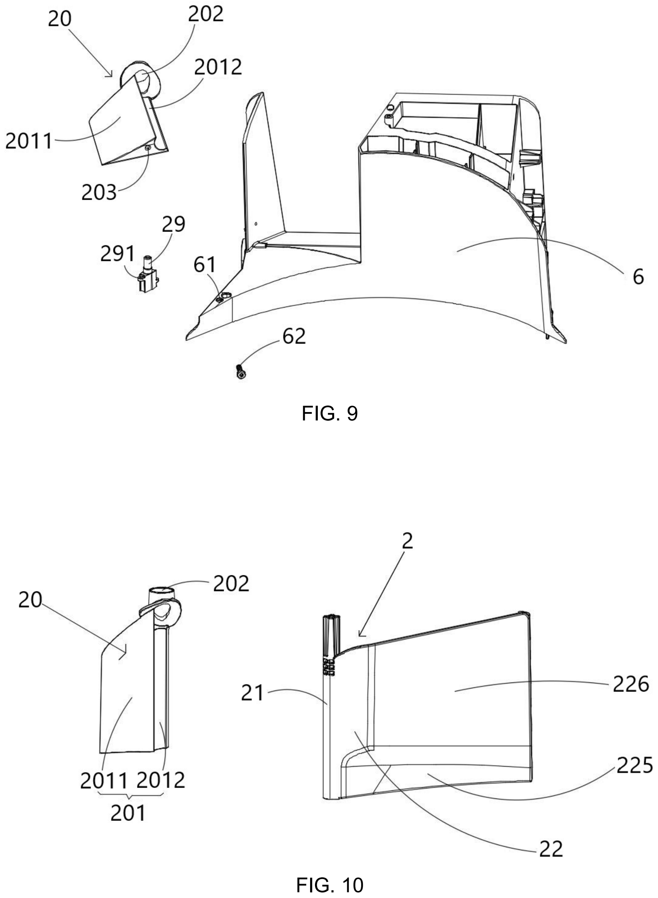

Please refer to FIG. 4 through FIG. 11 combined with FIG. 1. The door assembly 2 is provided with a first curved surface 225 and a second curved surface 226 on a side facing the cutting assembly 4. When the door assembly 2 blocks the connecting port 12, the mower 1 is switched to the lawn mulching mode, at this time, the first curved surface 225 is coplanar with an inner wall surface of the cutting cavity 11 and the first curved surface 226 and the cutting cavity 11 together form a cavity passage for the cutting assembly 4 to rotate, so as to enable lawn clippings cut by the cutting assembly 4 to be discharged from the bottom of the casing 10 and cover a ground. When the door assembly 2 rotates to expose the connecting port 12, the mower 1 is switched to the lawn collection mode, the second curved surface 226 is located in the lawn collection channel 13 and is coplanar with an inner wall surface of the lawn collection channel 13, so as to enable the lawn clippings cut by the cutting assembly 4 to be guided into the lawn collection bag 5 through the connecting port 12, the second curved surface 226 and the lawn collection channel 13, thereby achieving bagging of the lawn clippings. The first curved surface 225 and the second curved surface 226 are configured to be matched with a wall surface of the casing 10 respectively when the mower 1 is switched to different modes, thereby more effectively handling the cut lawn clippings.

The first curved surface 225 and the second curved surface 226 are vertically offset, and at least one end of the first curved surface 225 and the second curved surface 226 share a common edge.

The first curved surface 225 is an arc surface, and a radius of curvature of the first curved surface 225 is the same as a radius of curvature of an inner wall surface of the cutting cavity 11, and the second curved surface 226 is a single curved surface. In this way, the first curved surface 225 can be completely fitted with the inner wall surface of the cutting cavity 11, and the formed cavity passage can ensure a rotation of the cutting assembly 4. The second curved surface 226 is set as a single curved surface, which can avoid an accumulation of the lawn clippings when guiding them, enabling it to be more efficient.

In a vertical direction, the first curved surface 225 is at a same height as the cutting assembly 4, and the second curved surface 226 is located above the cutting assembly 4. An offset arrangement of the two curved surfaces ensures that the cutting assembly 4 is not affected by the second curved surface 226 when it rotates. Of course, in other embodiments, the second curved surface 226 may also be arranged below the cutting assembly 4, which is not limited here.

In the vertical direction, a height of the first curved surface 225 is one-fifth to one-quarter of a height of the second curved surface 226. This arrangement ensures that the cutting assembly 4 rotates while maximizing a guiding area of the second curved surface 226 in the lawn collection mode, thereby improving bagging efficiency. Of course, in other embodiments, there is no limitation on a vertical height ratio of the first curved surface 225 and the second curved surface 226.

The casing 10 is provided with a passing hole 101 for the door assembly 2 to pass through, and at least part of the door assembly 2 passes through the passing hole 101 and is fixedly connected with the knob assembly 3 so as to rotate synchronously with the knob assembly 3. The door assembly 2 includes a transmission shaft 21 and a stop block 22 connected with the transmission shaft 21, the transmission shaft 21 passes through the passing hole 101 and is fixedly connected with the knob assembly 3, and the first curved surface 225 and the second curved surface 226 are formed on the stop block 22. In other words, the transmission shaft 21 is fixed at one end of the connecting port 12, simultaneously passes through the passing hole 101 and is fixedly connected with the knob assembly 3. When the knob assembly 3 is rotated, the transmission shaft 21 is driven to rotate synchronously. Under a drive of the transmission shaft 21, the stop block 22 can rotate relative to the connecting port 12 to block or expose the connecting port 12.

The knob assembly 3 is provided with a screw hole 315 at a position corresponding to the passing hole 101. A shaft sleeve 28 is installed in the passing hole 101 to fix the transmission shaft 21 passing through the passing hole 101. When the knob assembly 3 is connected with the casing 10, the screw hole 315 and the transmission shaft 21 are aligned with each other. At this time, a screw 27 may be used to pass through the screw hole 315 and cooperate with the transmission shaft 21 to achieve a fixed connection between the transmission shaft 21 and the knob assembly.

The knob assembly 3 is fixed outside of the casing 10, and the door assembly 2 is fixed to one end of the connecting port 12 and connected with the knob assembly 3. In an embodiment, the door assembly 2 can rotate relative to the connecting port 12, so as to cover or expose the connecting port 12. While in other embodiments, the knob assembly 3 may also be arranged inside the casing 10. At this time, an operation port may be arranged on the casing 10 to expose a switch of the knob assembly for driving control, which is not limited here.

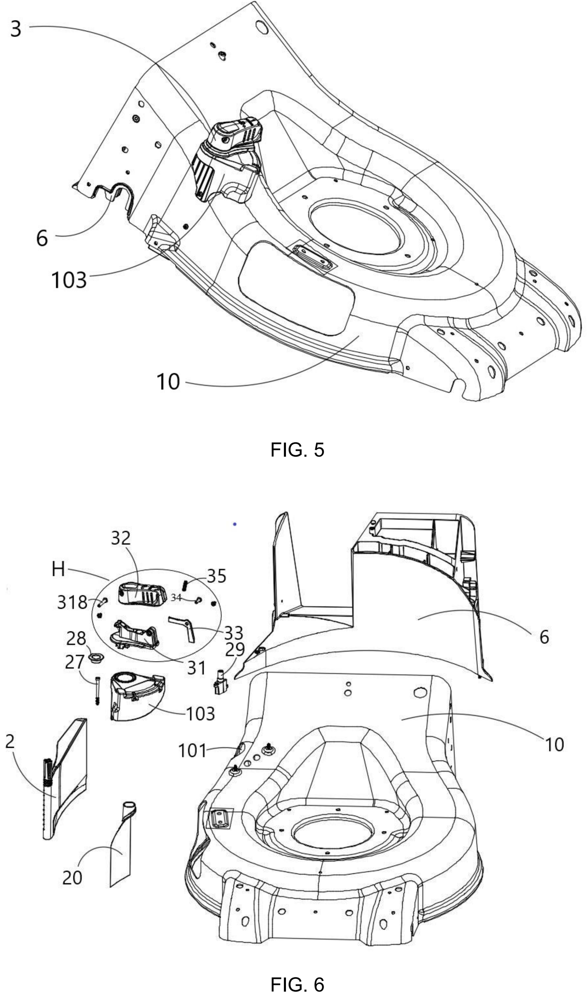

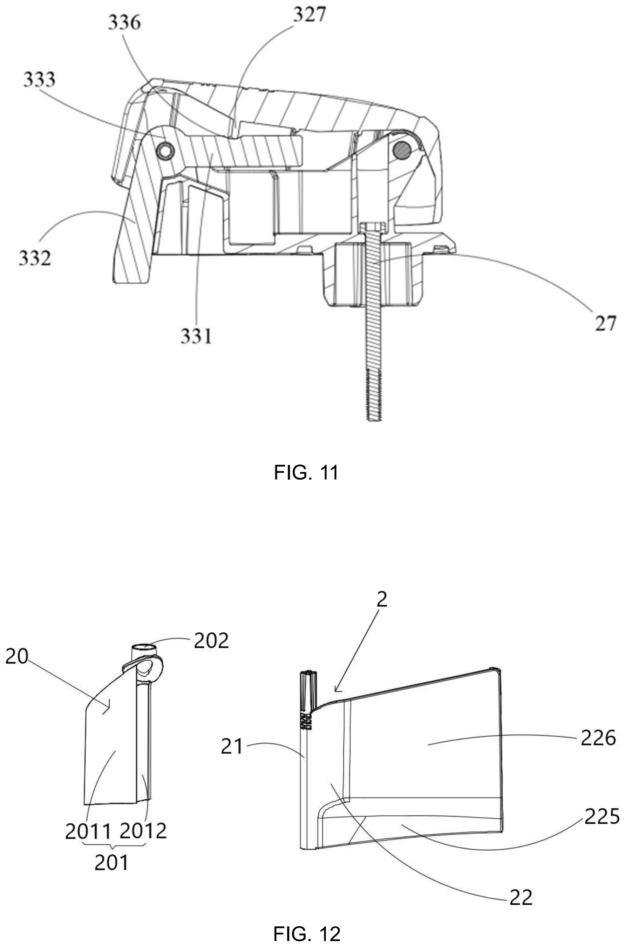

Please refer to FIG. 5 through FIG. 7 combined with FIG. 11. The knob assembly 3 includes a knob base 31, a knob cover 32 and a locking component 33. The locking component 33 has a locked state and an activated state. When the locking component 33 is in the locked state, the knob assembly 3 is not capable of rotating, when the locking component 33 is in the activated state, the knob assembly 3 is capable of rotating, and a rotating axis of the locking component 33 is substantially perpendicular to a rotating axis of the knob assembly 3.

Through pivotally connecting door assembly 2 on the casing 10, and connecting the knob assembly 2 with the door assembly 2, a rotation of the knob assembly 3 may drive the door assembly 2 to move. In addition, through setting the locking component 33 of the knob assembly 3 to have the locked state and the activated state, the knob assembly 3 cannot rotate when the locking component 33 is in the locked state, and the knob assembly 3 can rotate when the locking component 33 is in the activated state, so that the mower can be switched between the lawn collection mode and the lawn mulching mode, which is simple to operate and easy to use.

A first end of the locking component 33 is accommodated in an accommodating cavity 30 between the knob base 31 and the knob cover 32, a second end of the locking component 33 abuts against an outer wall surface of the casing 10 and is capable of rotating along the outer wall surface. The outer wall surface of the casing 10 is provided with at least two locking grooves 15 on a rotation path of the locking component 33. When the second end of the locking component 33 is accommodated in the one of the at least the two locking groove 15, the locking component 33 is in the locked state, the knob assembly 3 is not capable of rotating, and when the knob cover 32 is pressed, the first end of the locking component 33 moves toward the knob base 31, the second end of the locking component 33 disengages from the one of the at least the two locking groove 15, the locking component 33 is in the activated state, and the knob assembly 3 is capable of rotating.

In this embodiment, a base 103 is fixed to an outer side of the casing 10. The base 103 is provided with an inserting groove 130 corresponding to the passing hole 101, so that a vertically penetrating plug-in cavity is formed between the passing hole 101 and the inserting groove130. The transmission shaft 21 passes through the plug-in cavity and is fixedly connected with the knob assembly 3. The one of the at least the two locking groove 15 is arranged on the base 103. Of course, in other embodiments, the base 103 may be configured as an extending part integrally formed with the casing 10, which is not limited here.

The locking component 33 is generally V-shaped and includes a first locking arm 331, a second locking arm 332, and a connecting arm 333 connecting the first locking arm 331 with the second locking arm 332, the first locking arm 331 is accommodated in the accommodating cavity 30 and abuts against the knob cover 32, the connecting arm 333 is connected with the knob base 31 through a rotating shaft 34, and the second locking arm 332 is accommodated in the one of the at least the two locking groove 15. The locking component 33 is movably connected with the knob base 31. When the first locking arm 331 is pressed downward by the knob cover 32, the second locking arm 332 tilts upward and is disengaged from the one of the at least the two locking groove 15. At this time, the knob assembly 3 is in a rotatable state. When the second locking arm 332 is accommodated in the one of the at least the two locking groove 15, the knob assembly 3 is in the locked state and cannot be rotated. The door assembly 2, which is fixedly connected with the knob assembly 3, is also fixed. The rotating shaft 34 is a screw, and the connecting arm 333 is fixedly connected with the knob base 31 through a nut and the screw.

The knob assembly 3 further includes an elastic component 35 arranged in the accommodating cavity 30. In the vertical direction, the first locking arm 331 is clamped by the knob cover 32 and the elastic component 35. When the knob cover 32 is pressed, the first locking arm 331 is pushed to compress the elastic component 35, the second locking arm 332 tilts upward to be disengaged from the one of the at least the two locking groove 15, the knob assembly 3 is in the rotatable state, and after a pressure is released, the elastic component 35 drives the first locking arm 331 to reset, the second locking arm 332 is accommodated in the one of the at least the two locking groove 15, and at this time the knob assembly 3 is in the locked state. By introducing the elastic component 35, an elastic force of the elastic component 35 may be used to complete a rotation of the locking component 33, thereby completing a mode switching of the mower 1.

It is only necessary to simply press the knob cover 32 continuously and control the knob assembly 3 to rotate when operating. When the second locking arm 332 moves to the corresponding locking groove 15, the knob cover 32 is released. Under the elastic force of the elastic component 35, the second locking arm 332 enters the one of the at least the two locking groove 15 for locking, and the first locking arm 331 is lifted up. In other embodiments, alternatively, instead of using the elastic component 35, the second locking arm 332 may be pushed into the one of the at least the two locking groove 15 by hand or other tools,which is not limited here.

An inner side wall of the knob cover 32 is provided with a positioning strip 327 protruding toward the first locking arm 331, a side of the first locking arm 331 facing the knob cover 32 is correspondingly concave to define a positioning groove 336, and the positioning strip 327 extends into the positioning groove 336 and abuts against the first locking arm 331 in real time. With this arrangement, on one hand, the first locking arm 331 can abut against the knob cover 32 when pressed downward or tilted upward, without sliding or misaligning. On the other hand, the downward-protruding positioning strip 327 ensures that the first locking arm 331 is pressed downward a certain distance so that the second locking arm 332 can be smoothly disengaged from the one of the at least the two locking groove 15 when tilted upward.

The knob base 31 is provided with a pin hole 317 and a pin shaft 318 passing through the pin hole 317 at an end away from the locking groove 15, and the knob cover 32 is provided with an accommodating groove to accommodate the pin shaft 318. A fourth perforation hole 328 is opened on a side wall of the knob cover 32, and the fourth perforation hole 328 is communicated with the accommodating groove so as to enable the pin shaft 318 to pass through, and enable the knob cover 32 to be rotatably connected with the knob base 31. In other words, the knob cover 32 covers over the knob base 31, a first end of the knob cover 32 is rotatably connected with the knob base 31, a second end of the knob cover 32 is used to accommodate the locking component 33, and the second end of the knob cover 32 can be tilted upward when the first locking arm 331 is tilted upward.

The mower 1 further includes a guiding plate 20 fixedly connected with the casing 10, the guiding plate 20 is provided with a guiding surface 201 and a through hole 202. The guiding surface 201 is accommodated inside the casing 10, the through hole 202 is exposed outside the casing 10, and the transmission shaft 21 passes through the through hole 202 and is capable of rotating along the guiding surface 201. Optionally, the guiding plate 20 is a guiding structure integrally formed with the casing 10, the through hole 202 is opened on a protruding part of the casing 10 protruding towards the knob assembly 3, and the guiding surface 201 is an inner wall surface of the casing 10.

In this embodiment, the guiding plate 20 is a separate structure. One end of the guiding plate 20 with the through hole 202 passes through the passing hole 101 and exposes the through hole 202 to an outside of the casing 10. The guiding surface 201 includes a first guiding surface 2011 and a second guiding surface 2012. The first guiding surface 2011 is in contact with an inner wall surface of the cutting cavity 11 of the casing 10, and guides the cut lawn clippings to rotate along the inner wall surface without affecting the rotation of the cutting assembly 4. The transmission shaft 21 fits the second guiding surface 2012 and can rotate along the second guiding surface 2012. One end of the transmission shaft 21 passes through both the passing hole 101 and the through hole 202 to be exposed outside the casing 10. Wherein, the second guiding surface 2012 is a semi-circular arc surface, and the semi-circular arc surface is directly opposite the through hole 202.

The casing 10 is further provided with a first positioning block 29 fixedly connected with the guiding plate 20, a first end of the transmission shaft 21 passes through the through hole 202 to be exposed outside the casing 10, and a second end of the transmission shaft 21 is fixedly connected with the first positioning block 29 to realize a fixed connection between the door assembly 2 and the casing 10.

In this embodiment, the mower 1 further includes a rear blocking plate 6 fixedly connected with the casing 10. The first positioning block 29 is fixed on the rear blocking plate 6. The first positioning block 29 is provided with a preformed groove 291. A bottom of the guiding plate 20 is also provided with a corresponding preformed hole 203. The rear blocking plate 6 is provided with a preformed opening 61 and a fixing component 62 fixed in the preformed opening 61. When the rear blocking plate 6 is fixed to the casing 10, the preformed groove 291, the preformed hole 203 and the preformed opening 61 are aligned with each other. At this time, the fixing component 62 may pass through the preformed groove 291, the preformed hole 203 and the preformed opening 61 to achieve a fixed connection of the rear blocking plate 6, the casing 10 and the guiding plate 20.

Please refer to FIG. 1 through FIG. 3 combined with FIG. 12. The cutting assembly 4 includes a motor 41 and a cutter 42. The motor 41 is installed on an outer side of the casing 10, and the cutter 42 is accommodated inside the cutting cavity 11 and can rotate inside the cutting cavity 11. A notch is arranged on the casing 10, the notch is arranged at an installation position of the motor 41 on the casing 10, and the motor 41 is connected with the cutter 42 through the notch, so that the cutter 42 may be driven to rotate by the motor 41.

Please refer to FIG. 1 through FIG. 3 combined with FIG. 12. The lawn collection bag 5 is detachably installed at an end of the casing 10 away from the cutting cavity 11. Wherein, the casing 10 is provided with a buckle part 14, and the lawn collection bag 5 is provided with a corresponding matching part 51. The lawn collection bag 5 may be installed on the casing 10 by a mutual cooperation of the buckle part 14 and the matching part 51.

In this embodiment, the buckle part 14 is a circular protruding bar, and the matching part 51 is a matching groove, so that the circular protruding bar may be accommodated in the matching groove to realize an installation of the lawn collection bag 5 and the casing 10.

In summary, the mower 1 of the disclosure accommodates the first end of the locking component 33 in the accommodating cavity 30 between the knob base 31 and the knob cover 32, and enables the second end of the locking component 33 to abut against the outer wall surface of the casing 10 and rotate along the outer wall surface, so that the locking component 33 and the door assembly 2 fixedly connected with the knob assembly 3 can rotate synchronously when the knob assembly 3 is rotated, thus avoiding a need to disassemble the door assembly 2. Meanwhile, at least two locking grooves 15 are opened on the casing 10, when the knob assembly 3 is rotated so that the locking component 33 is accommodated in different locking grooves 15, the door assembly 2 can rotate to different states under a drive of the knob assembly 3, which realizes a switching between lawn collection mode and lawn mulching mode, and is simple to operate and easy to use.

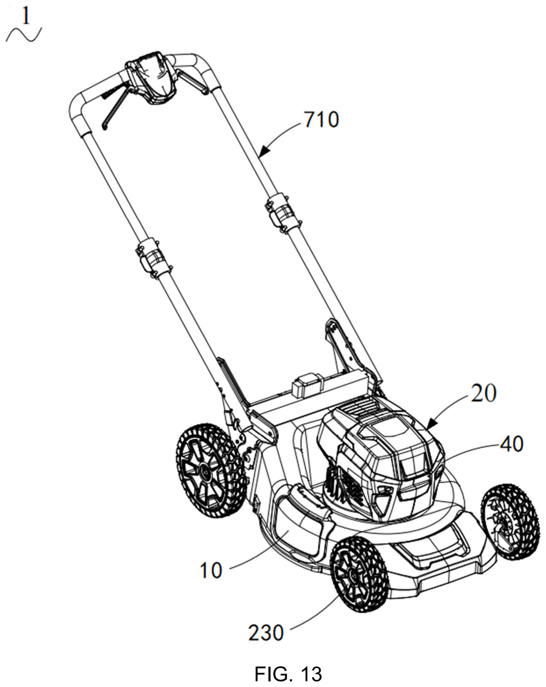

Please refer to FIG. 13. The mower 1 includes a main body 120 and a handle 710 extending rearward and upward from the main body 120. The main body 120 includes the casing 10, a power head 40, a cutter assembly, and a walking assembly 230, thereby ensuring that the mower 1 can work normally. The following is a detailed description of the handle 710.

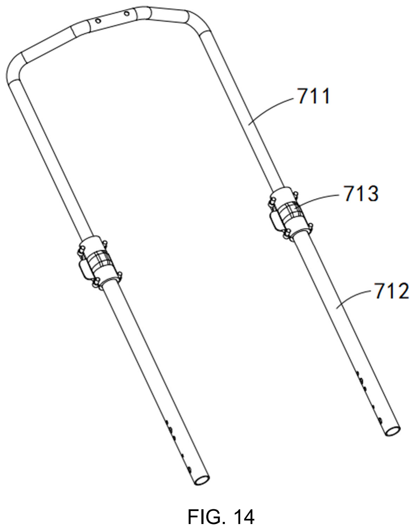

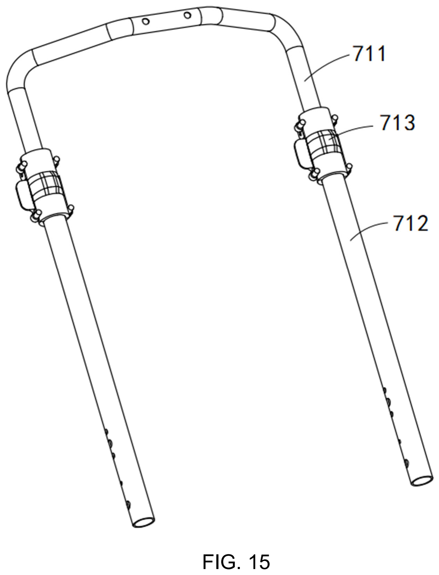

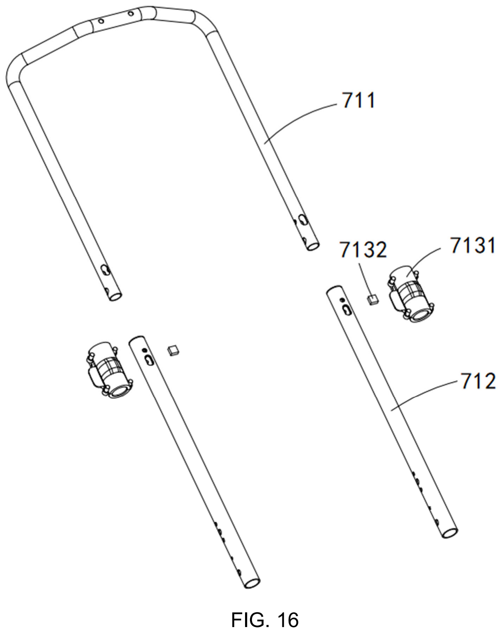

Please refer to FIG. 14 through FIG. 16 and FIG. 21. The handle 710 includes a lower rod assembly 712, an upper rod assembly 711 that can slide relative to the lower rod assembly 712, and a locking assembly 713 that can lock the upper rod assembly 711 and the lower rod assembly 712. The upper rod assembly 711 has an extended state and a retracted state. In the extended state (as shown in FIG. 14), the upper rod assembly 711 can extend outward relative to the lower rod assembly 712 to a first position. In the retracted state (as shown in FIG. 15), the upper rod assembly 711 can retract inward relative to the lower rod assembly 712 to a second position. The locking assembly 713 has a released state and a locked state. In the released state, the upper rod assembly 711 can slide freely relative to the lower rod assembly 712. In the locked state, the upper rod assembly 711 and the lower rod assembly 712 can lock each other at the first position/second position.

In one embodiment, the upper rod assembly 711 and the lower rod assembly 712 can be locked at both the first position and the second position. Of course, in another embodiment, the upper rod assembly 711 and the lower rod assembly 712 can also be locked only at the first position, without limiting a state at the second position.

The locking assembly 713 includes a locking element 7131, a sensing element 7132 and a triggering element 7133. The sensing element 7132 and the triggering element 7133 are fixed on the locking element 7131 and arranged opposite to each other. Only when the upper rod assembly 711 extends to the first position relative to the lower rod assembly 712, and the locking element 7131 locks the upper rod assembly 711 and the lower rod assembly 712 at the first position, the sensing element 7132 and the triggering element 7133 sense each other and conduct, so that the mower 1 can be turned on and work. In other cases, the mower 1 cannot be turned on and work.

The handle 710 includes a safety switch mechanism. The sensing element 7132 and the triggering element 7133 can only sense each other and conduct when the upper rod assembly 711 is in the extended state and the locking element 7131 keeps the upper rod assembly 711 and the lower rod assembly 712 locked in this state. At this time, the mower 1 can be turned on normally. Under other cases, the mower 1 cannot be turned on normally and remains in an off state.

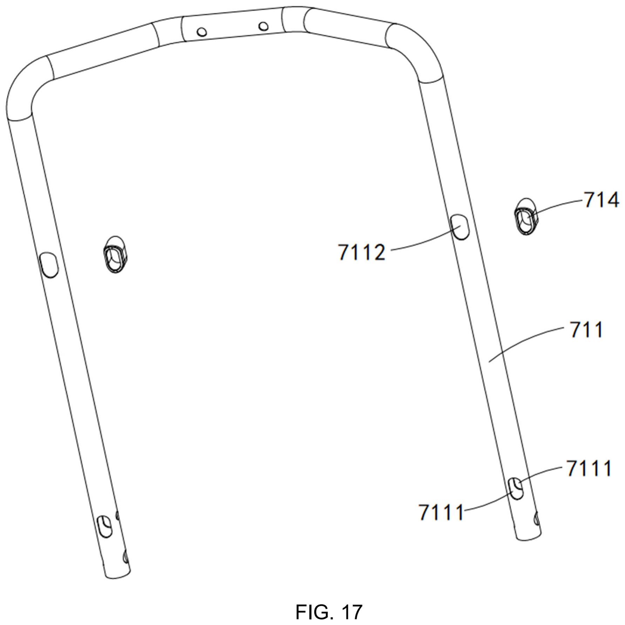

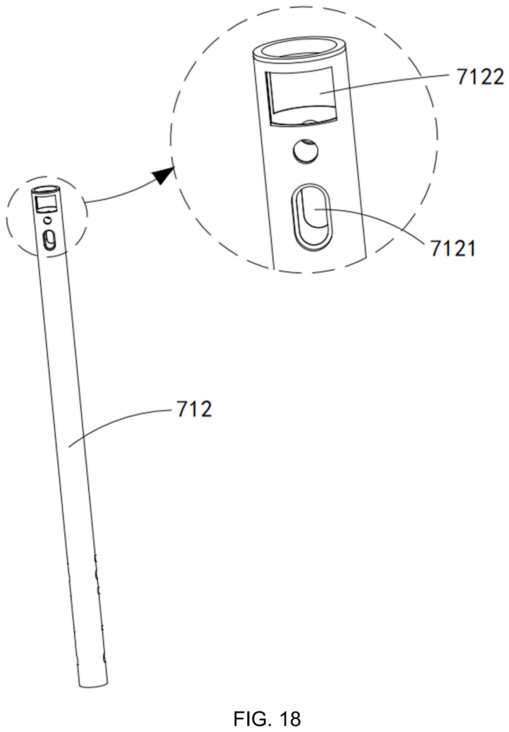

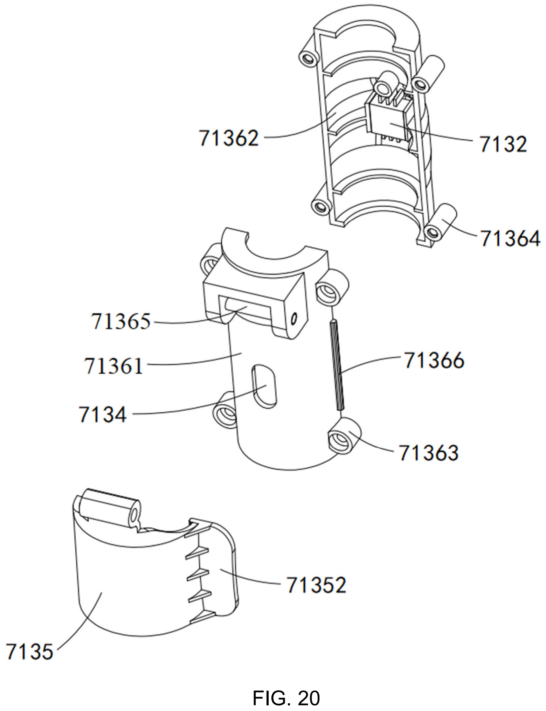

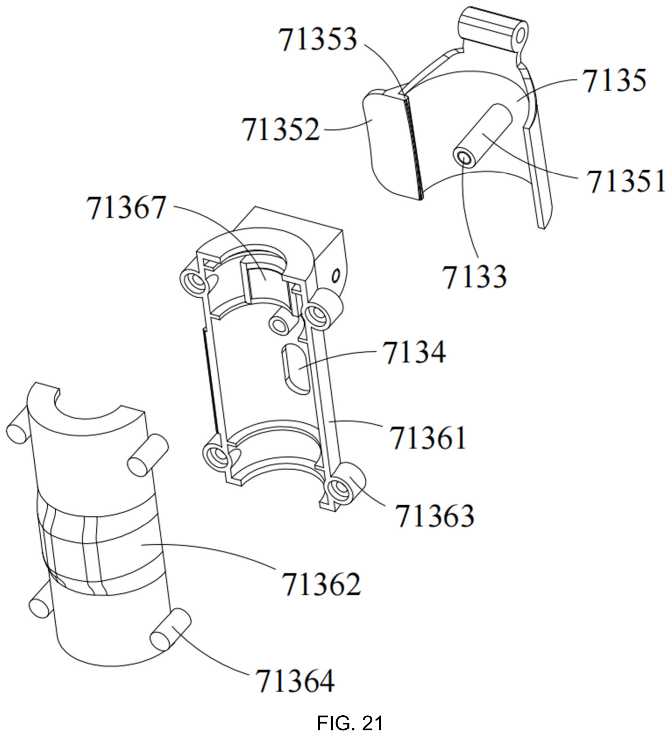

Please refer to FIG. 17 and FIG. 18 combined with FIG. 20 and FIG. 21. Both the upper rod assembly 711 and the lower rod assembly 712 are hollow tubular structures, and an outer diameter of the upper rod assembly 711 is slightly smaller than an inner diameter of the lower rod assembly 712, thereby ensuring that the upper rod assembly 711 can slide smoothly in and out of the lower rod assembly 712. The lower rod assembly 712 is provided with two first through holes 7121, the two first through holes 7121 are arranged opposite to each other and are communicated with each other. The upper rod assembly 711 is provided with two second through holes 7111, the two second through holes 7111 are also arranged opposite to each other. When the upper rod assembly 711 is in the first position, the first through hole 7121 and the second through hole 7111 are aligned with each other. The upper rod assembly 711 is further provided with a third through hole 7112. There is only one third through hole 7112. When the upper rod assembly 711 is in the second position, the third through hole 7112 is aligned with one of the first through holes 7121.

When the locking element 7131 locks the upper rod assembly 711 and the lower rod assembly 712 in the first position, the sensing element 7132 can be aligned with one of the first through holes 7121 and one of the the second through hole 7111, and the triggering element 7133 can be aligned with the other first through hole 7121 and the other the second through hole 7111. At this time, the sensing element 7132 senses the triggering element 7133. However, when the locking element 7131 locks the upper rod assembly 711 and the lower rod assembly 712 in the second position, the triggering element 7133 can be aligned with the third through hole 7112, while the sensing element 7132 is separated by the upper rod assembly 711, and the sensing element 7132 cannot sense the triggering element 7133.

In one embodiment, at the second position, the upper rod assembly 711 is used directly to separate the sensing element 7132 from the triggering element 7133. Of course, a blocking structure 714 may also be added inside the upper rod assembly 711 to separate the third through hole 7112 from an inner cavity of the upper rod assembly 711, so that the sensing element 7132 cannot sense the triggering element 7133.

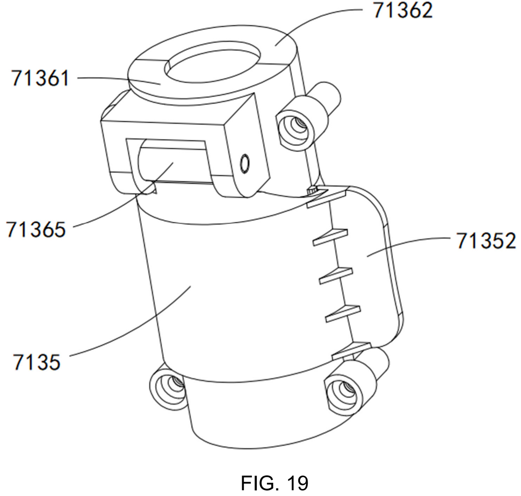

Please refer to FIG. 18 through FIG. 21. The locking element 7131 includes a tightening component fixed to an outer side wall of the lower rod assembly 712 and a fastening component 7135 rotatably connected with the tightening component. The tightening component is provided with a fourth through hole 7134 corresponding to one of the first through holes 7121. The fastening component 7135 is provided with a first fixing post 71351 protruding from the fastening component. The first fixing post 71351 is configured to be capable of being inserted into the lower rod assembly 712 through the fourth through hole 7134 and the first through hole 7121.

When the fastening component 7135 rotates away from the tightening component, which causes the first fixing post 71351 to be disengaged from the first through hole 7121 and the fourth through hole 7134, the locking assembly 713 is in the released state. At this time, the upper rod assembly 711 can extend and retract freely relative to the lower rod assembly 712. When the fastening component 7135 rotates toward the tightening component, which causes the first fixing post 71351 to be inserted into the second through hole 7111/third through hole 7112 through the fourth through hole 7134 and the first through hole 7121, the locking assembly 13 is in the locked state. At this time, the upper rod assembly 711 and the lower rod assembly 712 are fixed to each other.

In this embodiment, the triggering element 7133 is fixed inside the first fixing post 71351, and the sensing element 7132 is fixed inside the tightening component and aligned with the other first through hole 7121. In an embodiment, the tightening components include a first tightening component 71361 and a second tightening component 71362 that are assembled and matched with each other. The fourth through hole 7134 is opened on the first tightening component 71361, and the sensing element 7132 is fixed inside the second tightening component 71362. The first tightening component 71361 and the second tightening component 71362 are both semi-circular, and the lower rod assembly 712 is accommodated in a circular cavity formed by the first tightening component 71361 and the second tightening component 71362.

The first tightening component 71361 is provided with a first positioning part 71363 at each of its four corners, and the second tightening component 71362 is provided with a second positioning part 71364 at each of its four corners, and the four first positioning parts 71363 and the four second positioning parts 71364 are aligned with each other. In this embodiment, the first positioning part 71363 is a positioning post with a perforation hole, and the second positioning part 71364 is a threaded post with a threaded hole. When the first tightening component 71361 and the second tightening component 71362 are assembled together, the first positioning part 71363 and the second positioning part 71364 are aligned with each other, and the perforation hole and the threaded hole are communicated with each other. At this time, a screw may be used to pass through the perforation hole, locked and matched with the threaded hole to lock and connect the first tightening component 71361 with the second tightening component 71362.

The fastening component 7135 is rotatably connected with the first tightening component 71361. One end of the first tightening component 71361 is fixed with a rotation shaft 71365. One end of the fastening component 7135 is sleeved on the rotation shaft 71365 so that the fastening component 7135 can rotate around the rotation shaft 71365. One end of the fastening component 7135 is provided with a clamping part 71353 and a pulling part 71352. A rib 71366 protrudes from a side wall of the first tightening component 71361. The clamping part 71353 is used to be buckled with the rib 71366 to achieve a fixed connection between the fastening component 7135 and the first tightening component 71361. The pulling part 71352 is used to disengage the clamping part 71353 from the rib 71366 under an action of external force, so that the fastening component 7135 may be in the released state.

A second positioning block 71367 is arranged on an inner side wall of the first tightening component 71361, and the lower rod assembly 712 is provided with a corresponding first positioning hole 7122. The second positioning block 71367 is limited and accommodated in the first positioning hole 7122, thereby realizing a fixed connection between the first tightening component 71361 and the lower rod assembly 712.

In this disclosure, the sensing element 7132 and the triggering element 7133 may be implemented in various ways. As long as they can sense each other and enable the mower 1 to start normally, there is no limitation here. The following will illustrate three of the implementation methods with embodiments.

In a first implementation, both the sensing element 7132 and the triggering element 7133 are photoelectric sensors. When the upper rod assembly 711 extends outward to the first position, the first through hole 7121 and the second through hole 7111 are aligned with each other. At this time, the sensing element 7132 and the triggering element 7133 can sense each other and conduct, and the mower 1 can be turned on normally. When the upper rod assembly 711 retracts inward to the second position, the third through hole 7112 is aligned with one of the first through holes 7121. At this time, the sensing element 7132 and the triggering element 7133 are separated by the upper rod assembly 711/blocking structure 714, the sensing fails, and the mower 1 cannot be turned on.

In a second implementation, both the sensing element 7132 and the triggering element 7133 are Hall effect devices. When the upper rod assembly 711 extends outward to the first position, the first through hole 7121 and the second through hole 7111 are aligned with each other. At this time, the sensing element 7132 and the triggering element 7133 can sense each other and conduct, and the mower 1 can be turned on normally. When the upper rod assembly 711 retracts inward to the second position, the third through hole 7112 is aligned with one of the first through holes 7121. At this time, the sensing element 7132 and the triggering element 7133 are separated by the blocking structure 714, the sensing fails, and the mower 1 cannot be turned on.

In a third implementation, both the sensing element 7132 and the triggering element 7133 are mechanical switches. When the upper rod assembly 711 extends outward to the first position, the first through hole 7121 and the second through hole 7111 are aligned with each other. At this time, the sensing element 7132 and the triggering element 7133 can sense each other and conduct, and the mower 1 can be turned on normally. When the upper rod assembly 711 retracts inward to the second position, the third through hole 7112 is aligned with one of the first through holes 7121. At this time, the sensing element 7132 and the triggering element 7133 are separated by the blocking structure 714, the sensing fails, and the mower 1 cannot be turned on.

Please refer to FIG. 14. When the upper rod assembly 711 is in the extended state, the locking assembly 713 locks and fixes the upper rod assembly 711 and the lower rod assembly 712, and the upper rod assembly 711 cannot extend or retract. This state is a working state of the mower 1. At this time, the sensing element 7132 can sense the triggering element 7133, and the locking assembly 713 is in the locked state, which allows the mower 1 to be turned on.

Please refer to FIG. 15. When the upper rod assembly 711 is in the retracted state, the locking assembly 713 locks and fixes the upper rod assembly 711 and the lower rod assembly 712, and the upper rod assembly 711 cannot extend or retract. This state is a storage state of the mower 1. In this state, although the locking assembly 713 is in the locked state, due to the blocking structure 714, the sensing element 7132 cannot sense the triggering element 7133, and the mower 1 cannot be turned on at this time.

When the locking assembly 713 is in the released state, the upper rod assembly 711 may extend and retract freely relative to the lower rod assembly 712. At this time, the triggering element 7133 is far away from the sensing element 7132, and the sensing element 7132 cannot sense the triggering element 7133. Therefore, the mower 1 cannot be turned on.

In summary, the handle 710 of the disclosure configures the upper rod assembly 711 and the lower rod assembly 712 such that the sensing element 7132 and the triggering element 7133 will only sense each other and conduct when the upper rod assembly 711 extends to the first position relative to the lower rod assembly 712 and the locking element 7131 locks the upper rod assembly 711 and the lower rod assembly 712 at the first position, so that the mower 1 can start normally. In other cases, even if the locking assembly 713 is in the locked state, the sensing element 7132 and the triggering element 7133 cannot sense each other, and the mower 1 cannot start, thus avoiding dangerous situations and enhancing safety.

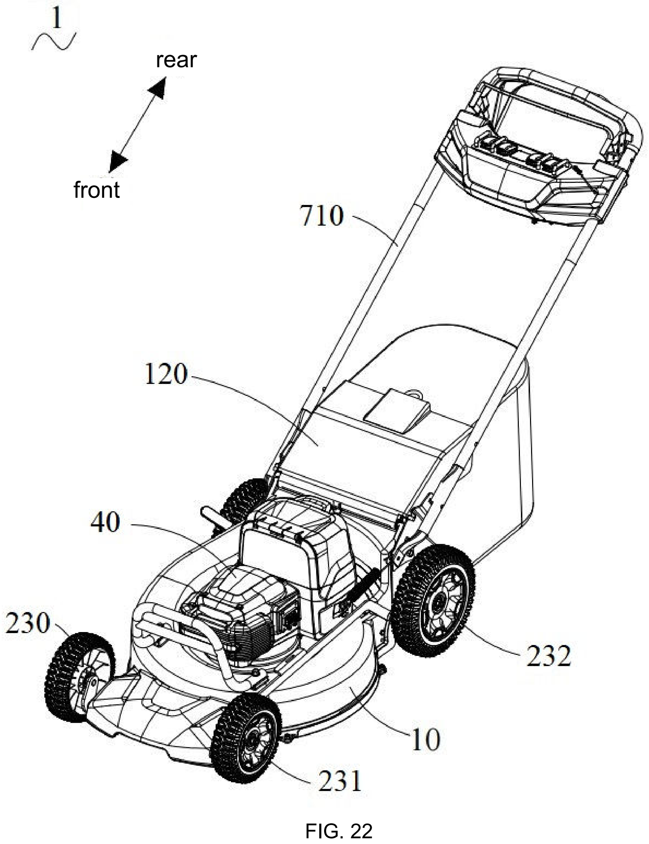

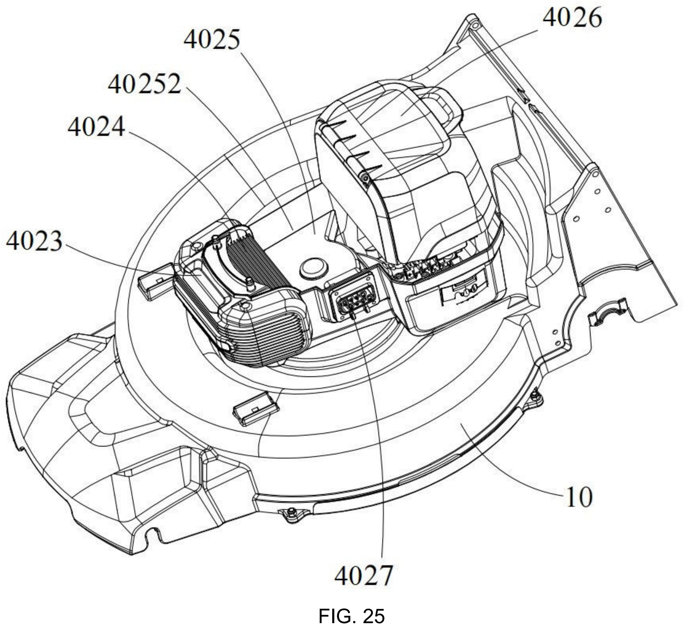

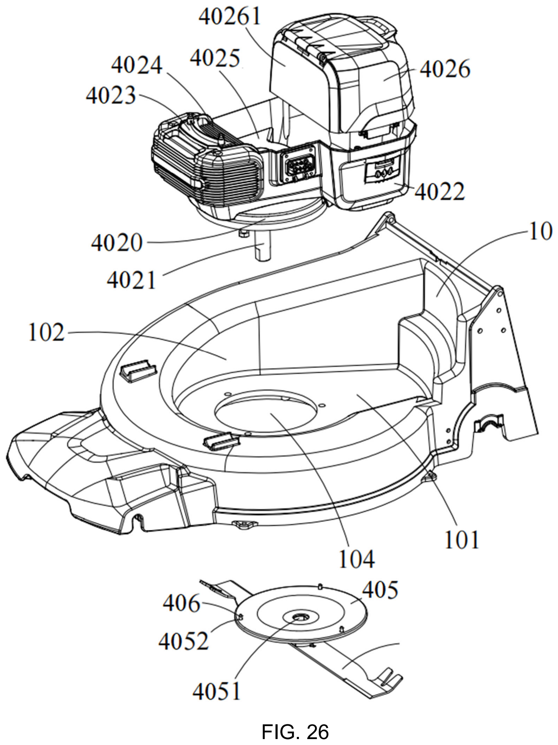

Please refer to FIG. 22 through FIG. 26. The disclosure provides the mower 1. The mower 1 includes the main body 120, the power head 40, the cutting assembly and the walking assembly 230. The main body 120 includes the casing 10 and the handle 710 connected with the casing 10. The handle 710 is used by an operator to push the mower 1. The power head 40 is installed on a top of the casing 10 and is used to provide power to the mower 1. The power head 40 includes the motor 41.

The cutting assembly is installed at the bottom of the casing 10 and connected with the motor 41 to cut under a drive of the motor 41. In this embodiment, the cutting assembly includes the cutter 42, and the cutter 42 is connected with an output shaft 21 of the motor 41, so that the cutter 42 can rotate under the drive of the motor 41 to mow.

The walking assembly 230 includes a pair of front walking wheels 231 and a pair of rear walking wheels 232. The pair of front walking wheels 231 and rear walking wheels 232 can not only support the main body 120, but also drive the mower 1 to walk. The pair of front walking wheels 231 and the pair of rear walking wheels 232 are distributed at four corners of the casing 10 to distribute an overall support force on the mower 1.

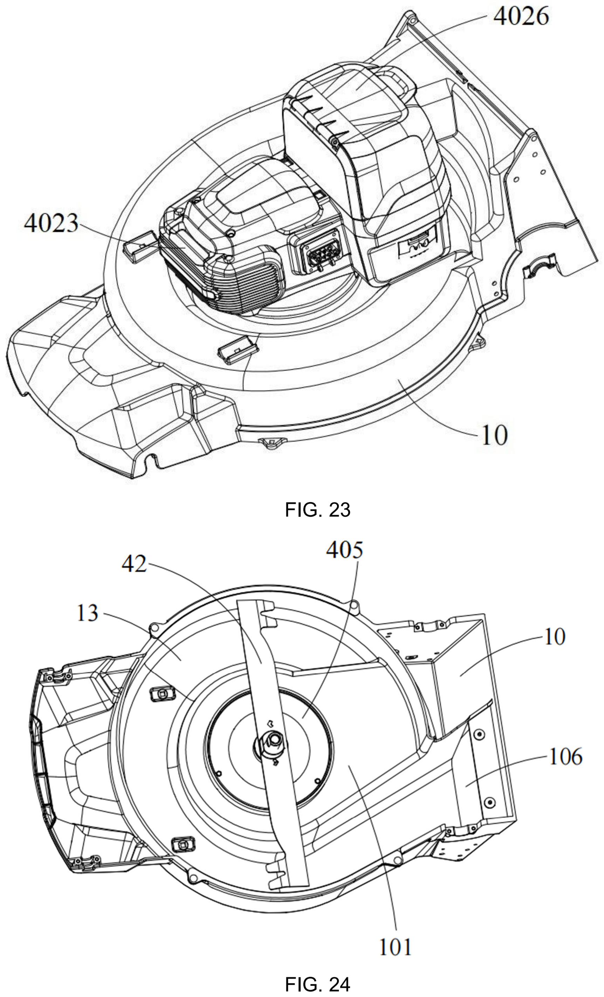

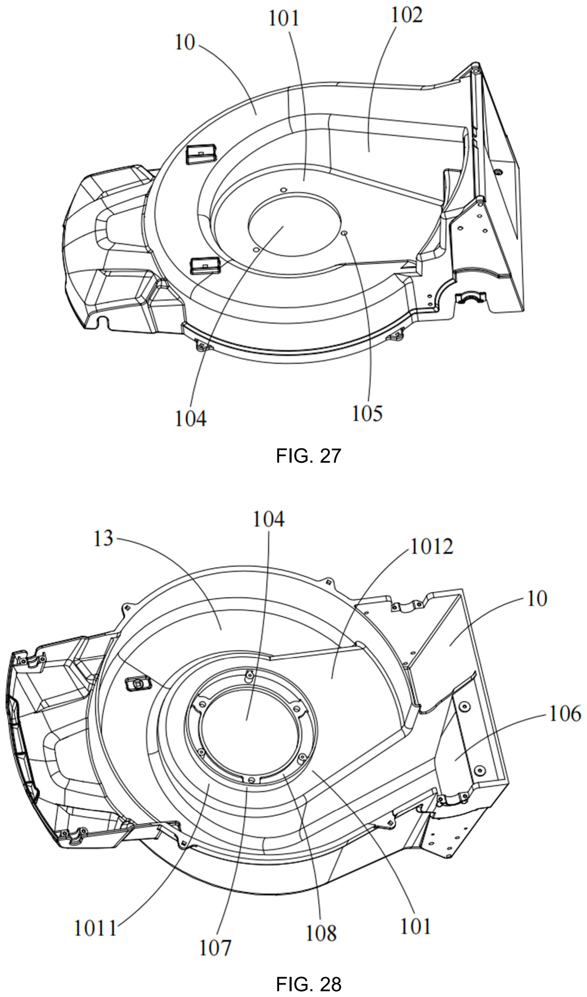

Please refer to FIG. 24 through FIG. 28. The casing 10 is provided with an installation portion 101, and the installation portion 101 is concave from a top of the casing 10 toward the bottom of the casing 10, so as to form a first installation groove 102 for installing the power head 40 on the top of the casing 10 and form the lawn collection channel 13 on the bottom of the casing 10. A lower surface of the installation portion 101 is lower than a lower surface of the lawn collection channel 13, so that the lawn collection channel 13 is arranged around the installation portion 101.

The installation portion 101 is recessed a certain distance relative to a top surface of the casing 10 to form the first installation groove 102 between the installation portion 101 and the top of the casing 10 for installing the power head 40. While a recessed structure of the installation portion 101 forms the lawn collection channel 13 around the installation portion 101 at the bottom of the casing 10. This arrangement reduces a height of the power head 40 installed on the casing 10, thereby lowering an overall height of the mower 1 corresponding to the power head 40.

This allows for a smaller packaging box size when packaging the mower 1, thus reducing both packaging and transportation costs.

An installation hole 104 is arranged at a center of the casing 10. The first installation groove 102 surrounds the installation hole 104 and is communicated with the installation hole 104. Thus, the power head 40 may be accommodated entirely in the first installation groove 102, and the motor 41 passes through the installation hole 104 and is fixed in the installation hole 104.

The installation portion 101 has a first perforation hole 105, and the first perforation hole 105 is arranged near the installation hole 104 so as to lock and fix the power head 40 in the first installation groove 102. In an embodiment, there are three first perforation holes 105, and the three first perforation holes are evenly distributed on an outer circumferential side of the installation hole 104. In this embodiment, the first perforation hole 105 is a screw hole, and the power head 40 is also provided with a corresponding screw hole, so that the power head 40 may be fixed on the installation portion 101 by using the screw passing through the first perforation hole 105 and the screw hole.

In other embodiments, a fixed connection between the power head 40 and the installation portion 101 may also be other way, such as buckle connection, riveting, etc., which is not limited here.

The casing 10 is further provided with a lawn discharging port 106 on a side facing the cutting assembly. The lawn discharging port 106 is communicated with the lawn collection channel 13 so that the lawn in the lawn collection channel 13 may be discharged from the lawn discharging port 106. In an embodiment, the installation portion 101 includes a first part 1011 and a second part 1012. The first part 1011 is located at the center of the casing 10. The installation hole 104 is opened in the first part 1011. The second part 1012 connects the first part 1011 with a side wall of the casing 10, so that the lawn collection channel 13 is located at an outer side of the first part 1011 and the second part 1012 and is separated by the second part 1012. At this time, the lawn collection channel 13 cannot form a complete ring. From the bottom of the casing 10 (which means from the bottom view of the casing 10), the lawn discharging port 106 is arranged at a tail end of the lawn collection channel 13 in a counterclockwise direction.

In this embodiment, viewed from the bottom of the casing 10, the cutter 42 rotates counterclockwise. Therefore, the lawn discharging port 106 is located at the tail end of the lawn collection channel 13 in the counterclockwise direction. As the cutter 42 rotates, the cut lawn clippings will enter the lawn collection channel 13 and flow along the lawn collection channel 13 under a drive of the cutter 42, and finally be discharged through the lawn discharging port 106.

The casing 10 is provided with a first sealing component 405 on a side facing the cutting assembly. The first sealing component 405 covers the installation hole 104 and is fixedly connected with the casing 10 to achieve a sealed connection between the motor 41 and the casing 10. In an embodiment, a second perforation hole 4051 is arranged at the center of the first sealing component 405. The second perforation hole 4051 is communicated with the installation hole 104. The output shaft 21 of the motor 41 passes through the installation hole 104 and the second perforation hole 4051 and is connected with the cutter 42. Thus, when the output shaft 21 of the motor 41 rotates, the cutter 42 may be driven to rotate synchronously.

An annular wall 107 is arranged and protrudes on a side of the casing 10 facing the cutting assembly. The first sealing component 405 is accommodated in an accommodating space 108 formed by the annular wall 107. A third perforation hole 4052 is arranged at an outer peripheral edge of the first sealing component 405 so that the third tightening component 406 passes through the third perforation hole 4052 to lock and fix the first sealing component 405 to the casing 10. In this embodiment, the annular wall 107 protrudes from the bottom of the first part 1011 of the installation portion 101, and the accommodating space 108 is formed together by the annular wall 107 and the bottom wall of the first part 1011.

The first sealing component 405 provides a better sealing effect at the bottom of the mower 1, so that no lawn will enter the motor 41 during mowing. After the mower 1 finishes mowing, the bottom of the casing 10 may be rinsed directly with a high-pressure water gun without water entering the motor 41.

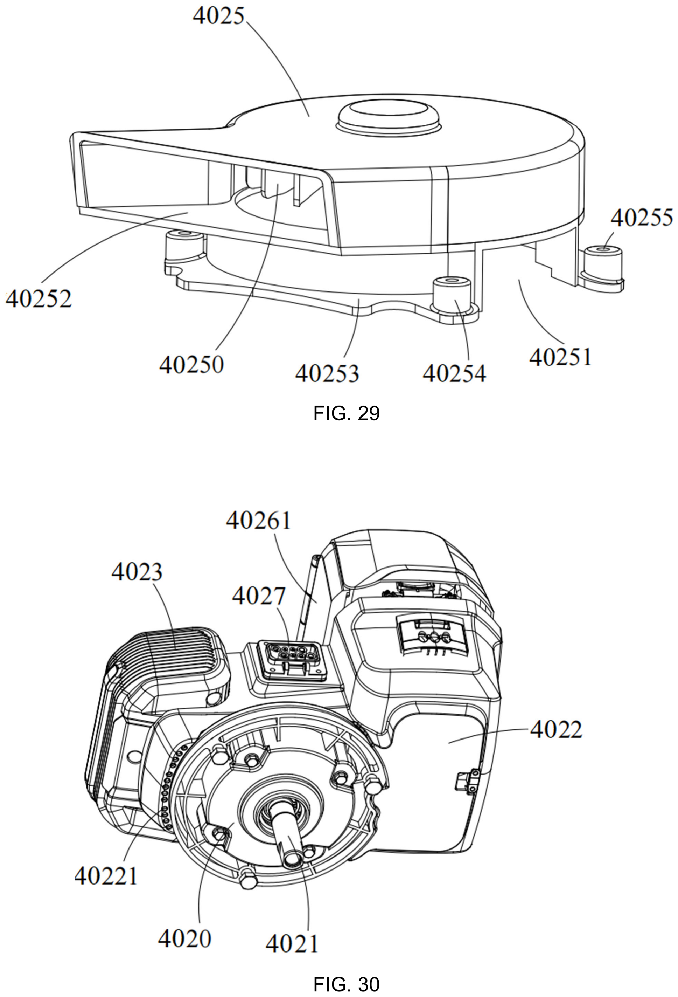

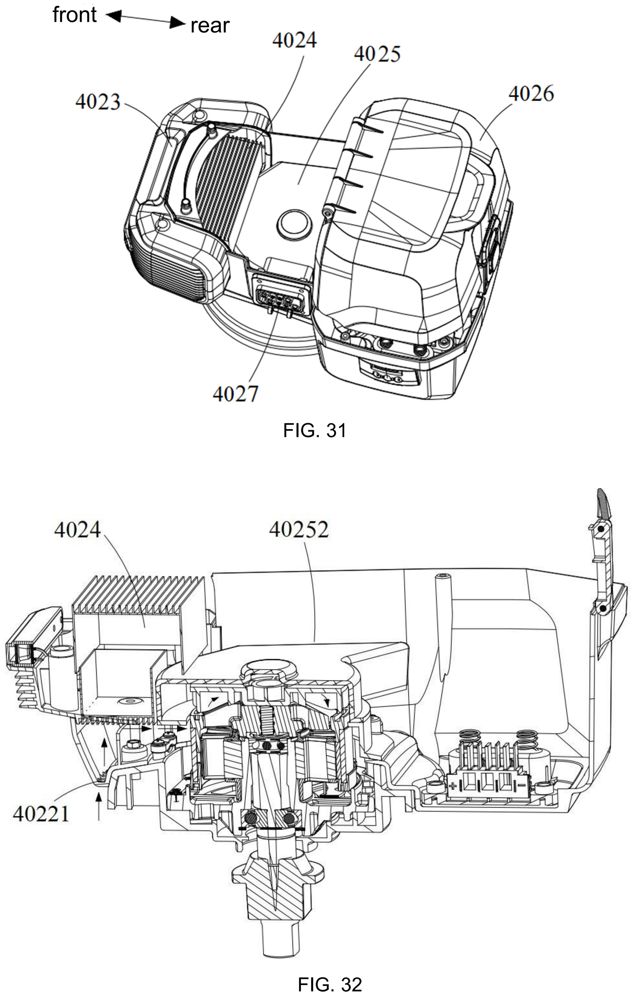

Please refer to FIG. 29 through FIG. 33 combined with FIG. 23. The power head 40 further includes a base body 4022 located above the casing 10, a protective housing 4023 connected with the base body 4022, a control board 4024 accommodated in the protective housing 4023, and a volute 4025 arranged near the control board 4024. The base body 4022 is provided with an air inlet hole 40221 on the side facing the casing 10. The control board 4024 is correspondingly arranged above the air inlet hole 40221. The volute 4025 is provided with a first air inlet 40251 and a first air outlet 40252, and the first air inlet 40251 is opened towards the control board 4024. Thus, airflow entering from the air inlet 40221 will preferentially pass through the control board 4024, then enter the volute 4025 from the first air inlet 40251 of the volute 4025, and finally be discharged from the first air outlet 40252. In this way, heat on the control board 4024 can be removed.

The air inlet hole 40221 is arranged in a straight line and is located on an outer side of the motor 41, so that external airflow enters the base body 4022 from a side of the motor 41. The protective housing 4023 is hollow, and the air inlet hole 40221 is communicated with an inner cavity of the protective housing 4023. The control board 4024 is vertically arranged inside the protective housing 4023. In this embodiment, the protective housing 4023 is made of metal, preferably an aluminum alloy shell, this is because aluminum alloy has a faster heat transfer rate, and generated heat may be quickly discharged through an aluminum alloy housing, so that the mower 1 will not stop working due to the control board 4024 being too hot. In addition, heat dissipation ribs are arranged on an outer side of the aluminum alloy housing to further enhance a heat dissipation effect. In other embodiments, the protective housing 4023 may be made of other materials, which is not limited here.

The volute 4025 is fixed above the motor 41. The first air inlet 40251 of the volute 4025 faces the control board 4024, and an upper surface of the control board 4024 is basically flush with an upper surface of the volute 4025, so that the airflow passing through the control board 4024 can completely enter the volute 4025 from the first air inlet 40251. The volute 4025 is provided with a first fan 40250, and the first air outlet 40252 faces a side of the base body 4022 and is aligned with an air outlet on the power head 40. When the motor 41 is running, the airflow enters from the air inlet hole 40221 at a bottom of the base body 4022, passes through the control board 4024 inside the protective housing 4023, then passes through the volute 4025 above the motor 41, and finally flows out from the air outlet on the side of the power head 40. This is equivalent to having a constant airflow blowing on the control board 4024, and the control board 4024 is fixed inside the protective housing 4023, which also has a heat dissipation function. Therefore, the control board 4024 will not be damaged due to excessive temperature, and the power head 40 or even the entire mower 1 will not be unable to work.

The bottom of the volute 4025 is provided with an installation plate 40253, and the installation plate 40253 is provided with an installation post 40254. The installation post 40254 is provided with a locking hole 40255, so that the volute 4025 can be fixed above the motor 41 by using screws passing through the locking hole 40255. The volute 4025 is fixed above the motor 41. Airflow always passes through the first air inlet 40251 of the volute 4025, which may dissipate heat from the motor 41, enabling the motor 41 to work continuously and stably without failing to work due to overheating.

In a forward and backward direction (which means a forward direction of the mower 1), the control board 4024 is arranged in front of the volute 4025, and the battery pack assembly 4026 is arranged behind the volute 4025. The control board 4024, the volute 4025 and the battery pack assembly 4026 are all accommodated in the base body 4022. A side of the base body 4022 is provided with an external port 4027 that is electrically connected with the battery pack assembly 4026. The external port 4027 is used to connect an external power source to power the mower 1. The external power source is preferably a backpack battery, and the backpack battery may be connected in series, in parallel, or in series-parallel connection with the battery pack assembly 4026 inside the power head 40, which is not limited here. The external port 4027 allows the mower 1 to work for longer periods, thus improving working efficiency of the mower 1.

The battery pack assembly 4026 includes a battery pack housing 40261, a battery pack cover 40262 pivotally buckled with the battery pack housing 40261, and a battery pack accommodated in a battery cavity formed by the battery pack housing 40261 and the battery pack cover 40262. A first end of the battery pack housing 40261 is provided with a first pivot part 40263, and one end of the battery pack cover 40262 is provided with a corresponding second pivot part 40264. The first pivot part 40263 is arranged between two adjacent second pivot parts 40264, and a pivot shaft passes through the first pivot part 40263 and the second pivot part 40264 to connect the battery pack housing 40261 with the battery pack cover 40262. The battery pack cover 40262 can be opened in a rotating manner relative to the battery pack housing 40261, which enables it to be convenient to take out the battery pack.

A second end of the battery pack housing 40261 is provided with a first buckle 40265 and a buckling part 40266 is arranged at a second end of the battery pack cover 40262. A buckling groove 40267 and an abutting part 40268 protruding into the buckling groove 40267 are formed in the buckling part 40266. The abutting part 40268 protrudes into the buckling groove 40267 from top to bottom, so that when the battery pack cover 40262 is closed, the first buckle 40265 may be clamped into the buckling groove 40267 and abut against the abutting part 40268 to restrict the first buckle 40265 within the buckling groove 40267. In this way, a fixed connection is achieved between the battery pack cover 40262 and the battery pack housing 40261. Of course, in other embodiments, the battery pack cover 40262 and the battery pack housing 40261 may also be fixedly connected in other ways, which will not be described in detail here, nor will any limitation be imposed.

In summary, the installation portion 101 on the casing 10 of the mower 1 of the disclosure is set to be concave from the top of the casing 10 toward the bottom of the casing 10, so as to form the first installation groove 102 for installing the power head 40 on the top of the casing 10 and form the lawn collection channel 13 on the bottom of the casing 10. And the lower surface of the installation portion 101 is lower than the lower surface of the lawn collection channel 13, so that the lawn collection channel 13 is arranged around the installation portion 101. In this way, a lawn discharging effect is not affected, and the height of the power head 40 installed on the casing 10 can be reduced. This allows for smaller packaging size, increased quantity per box, and savings in packaging and transportation costs during packing and transportation.

In addition, the base body 4022 is provided with the air inlet hole 40221 on the side facing the casing 10. The control board 4024 is correspondingly arranged above the air inlet hole 40221, at the same time, the volute 4025 is provided with the first air inlet 40251 and the first air outlet 40252, and the first air inlet 40251 is opened towards the control board 4024, so that the airflow entering from the air inlet 40221 will preferentially pass through the control board 4024, then enter the volute 4025 from the first air inlet 40251 of the volute 4025, and finally be discharged from the first air outlet 40252. In this way, the heat on the motor 41 and the control board 4024 can be dissipated, so that the power head 40 will not be damaged or even fail to work due to the excessive temperature of the motor 41 and the control board 4024.

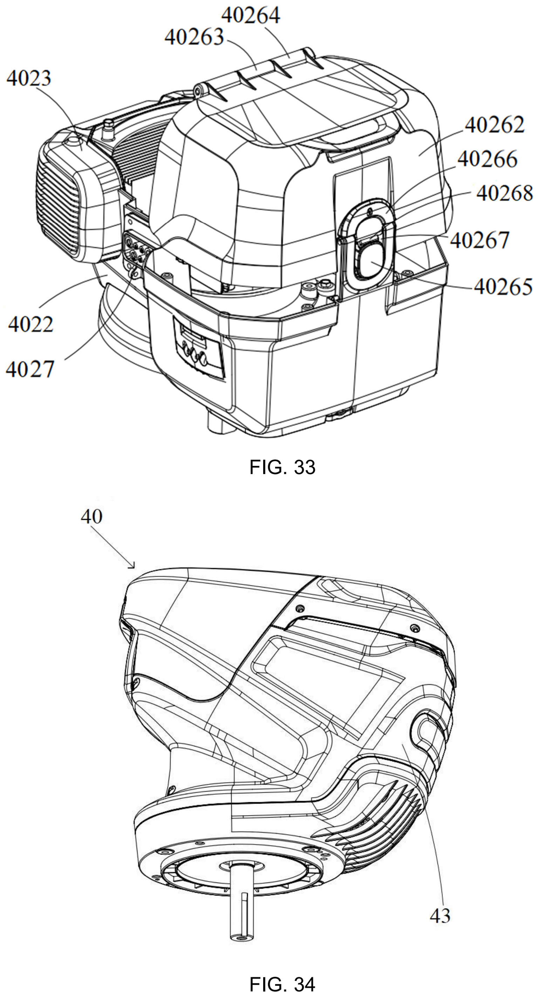

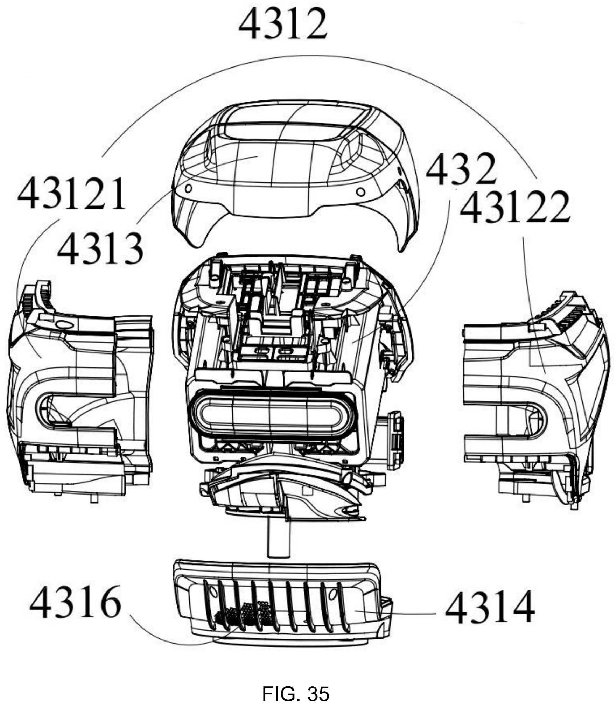

Please refer to FIG. 34 through FIG. 36. The power head 40 applied to the mower includes a power head casing 43, a battery pack cavity 432 and the motor 41. The power head casing 43 is provided with a second accommodating cavity 4311. The battery pack cavity 432 and the motor 41 are both stored in the second accommodating cavity 4311 and arranged vertically, and the motor 41 is located below the battery pack cavity 432.

A second air inlet 4315 is opened at a top of the power head casing 43 and a second air outlet 4316 is opened at a bottom of the power head casing 43. The second air outlet 4316 is arranged near the motor 41. The second air inlet 4315 is provided with a guiding air passage (indicated by an arrow in a figure). The guiding air passage is used to guide the airflow entering from the second air inlet 4315 into the second accommodating cavity 4311, then sink down along the battery pack cavity 432 into the motor 41, and be discharged from the second air outlet under an action of the motor 41. In this way, the airflow forms an air path. Under an action of the guiding air passage, the airflow passes through the battery pack cavity 432 and the motor 41, thereby simultaneously cooling and dissipating heat from both the battery pack cavity 432 and the motor 41.

The power head casing 43 includes a housing 4312 and a cover 4313. The housing 4312 includes a first housing 43121 and a second housing 43122 with a same structure. The first housing 43121 and the second housing 43122 are assembled together and arranged around an outside of the power head 40. The cover 4313 covers above the housing 4312, is rotatably connected with the housing 4312, and can be opened or closed relative to the housing 4312.

The power head casing 43 further includes a second base 4314, and the second base 4314 is located below the housing 4312 and fixedly connected with the housing 4312. The cover 4313, the housing 4312 and the second base 4314 are assembled together to form a second accommodating cavity 4311 for storing the battery pack cavity 432 and the motor 41. The second air inlet 4315 is arranged on a top of the housing 4312 and the second air outlet 4316 is arranged on the second base 4314. The second base 4314 has good thermal conductivity. In one embodiment, the second base 4314 is made of metal.

The power head 40 further includes an air guiding plate, the air guiding plate cooperates with the battery pack cavity 432 and the motor 41 to form the complete guiding air passage, so that the airflow enters from the second air inlet 4315, passes through the battery pack cavity 432 and the motor 41, and is discharged from the second air outlet 4316 to dissipate heat from the battery pack cavity 432 and the motor 41.

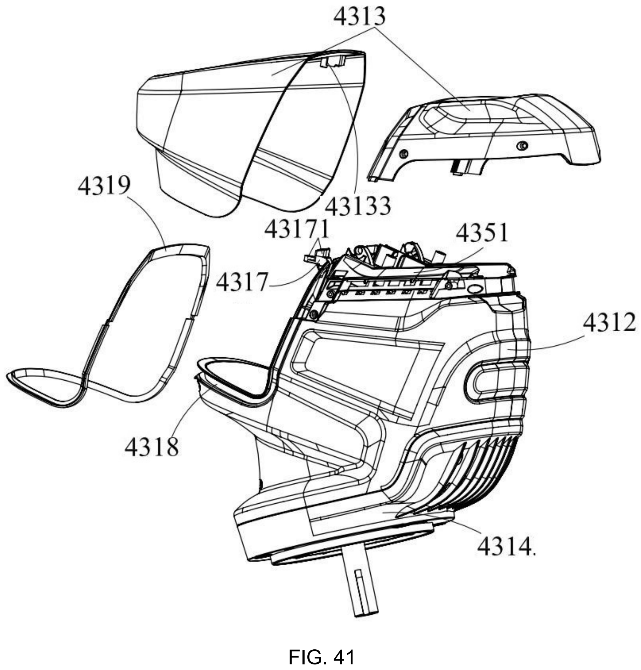

Combined with FIG. 41, the air guiding plate includes a first air guiding plate 4351 and a second air guiding plate 4352. A first end of the first air guiding plate 4351 is fixed to a top of the power head casing 43, and a second end of the first air guiding plate 4351 extends into the second accommodating cavity 4311 and is spaced apart from the inner side wall of the power head casing 43. The guiding air passage is formed between the first air guiding plate 4351 and an inner side wall of the power head casing 43. The first air guiding plate 4351 is fixed between the cover 4313 and the housing 4312. There are two first air guiding plates 4351, which are respectively arranged on two sides of the power head 40.

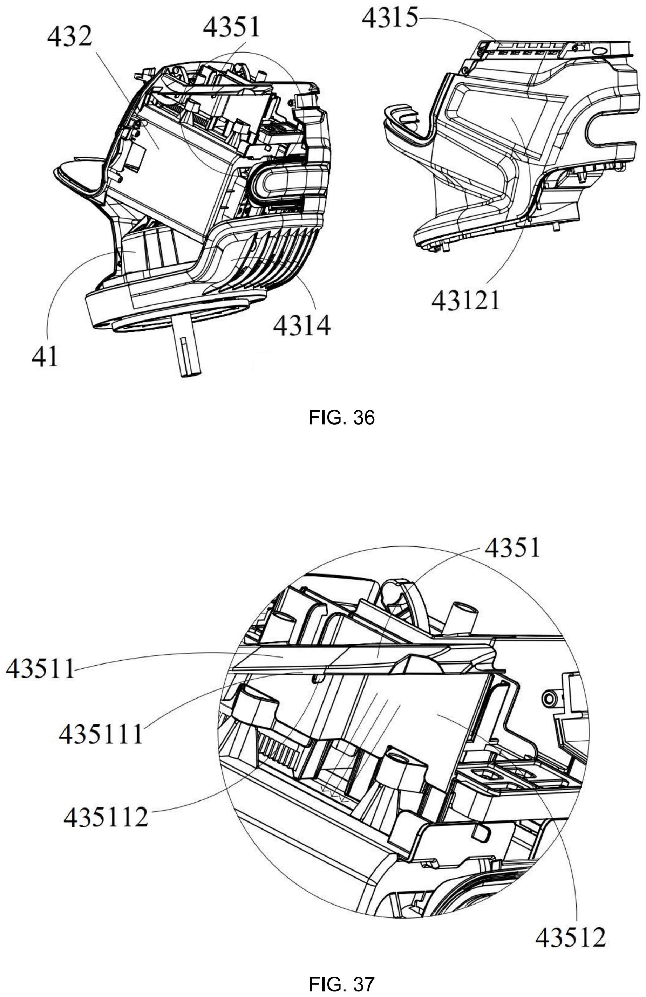

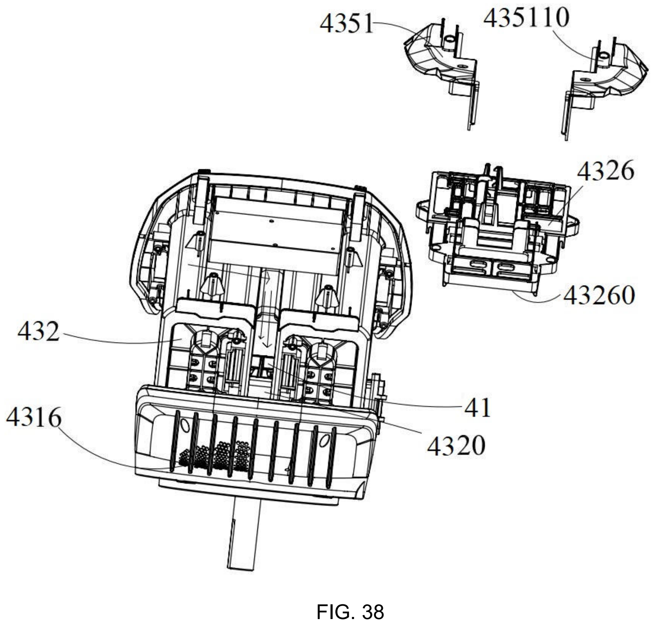

Please refer to FIG. 37 and FIG. 38. The first air guiding plate 4351 includes a first air guiding piece 43511 partially covering the housing 4312 and a second air guiding piece 43512 extending from the first air guiding piece 43511 into the second accommodating cavity 4311. The first air guiding piece 43511 and the second air guiding piece 43512 are perpendicular to each other, and the guiding air passage is formed between the second air guiding piece 43512 and an inner side wall of the power head casing 43.

In this embodiment, the first air guiding piece 43511 is provided with a reserved hole 435110, and the cover 4313 is provided with a corresponding reserved post. The reserved post is accommodated in the reserved hole 435110 to achieve a fixed connection between the cover 4313 and the first air guiding piece 43511.

The first air guiding piece 43511 is provided with a covering edge 435111 extending toward an outside of the housing 4312. When the first air guiding piece 43511 is covered on the top of the housing 4312, the covering edge 435111 covers the second air inlet 4315. The second air inlet 4315 is configured as a shutter, and the first air guiding piece 43511 is further provided with a limiting bar 435112. When the first air guiding piece 43511 covers the top of the housing 4312, the limiting bar 435112 is located outside the second air inlet 4315.

The power head 40 further includes a preformed plate 4326, and preformed plate 4326 is arranged between the battery pack cavity 432 and the second air guiding piece 43512 to fix the battery pack cavity 432 and the second air guiding piece 43512.

A ventilation area 43260 is arranged between the preformed plate 4326 and the battery pack cavity 432. The ventilation area 43260 is communicated with the guiding air passage. When the airflow enters the guiding air passage from the second air inlet 4315, it flows into the ventilation area 43260 along the second air guiding piece 43512, and then enters the battery pack cavity 432 through the ventilation area 43260. The housing 4312 is provided with ribs. When the housing 4312 is fixed to the cover 4313, the ribs are tightly combined with the second air guiding piece 43512, so that the airflow can only sink along the second air guiding piece 43512 and enter the ventilation area 43260.

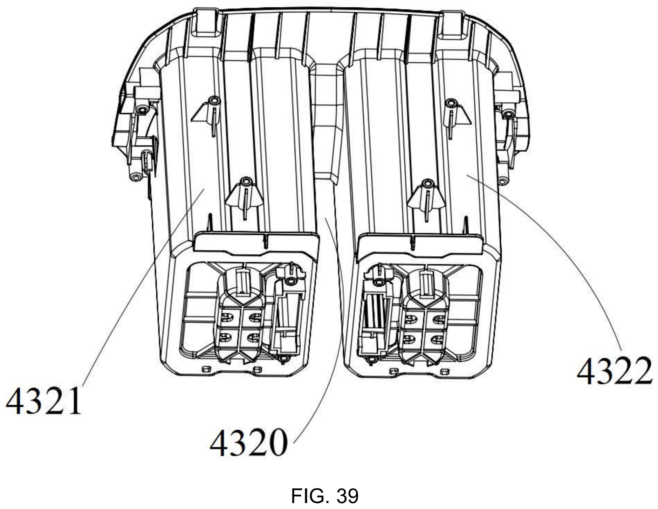

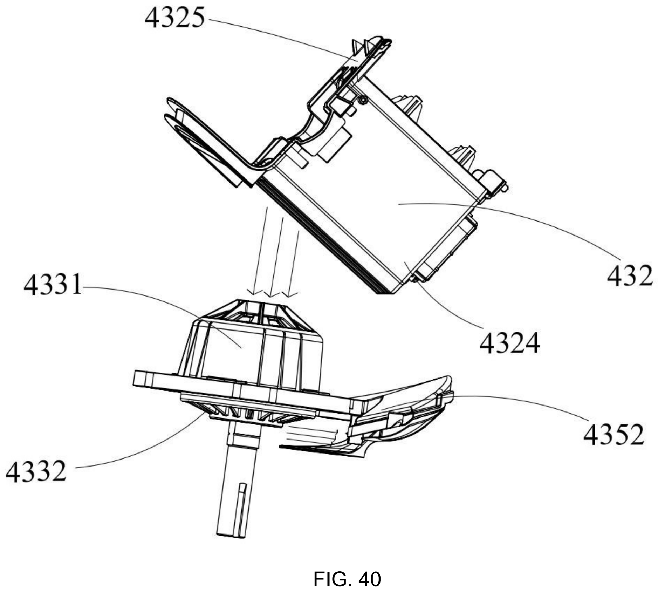

Please refer to FIG. 39 and FIG. 40. The battery pack cavity 432 is used to accommodate the battery pack. The battery pack cavity 432 includes a first battery pack cavity 4321 and a second battery pack cavity 4322 arranged in parallel with each other. A gap 4320 is left between the first battery pack cavity 4321 and the second battery pack cavity 4322. The airflow descends along the gap 4320 into the motor 41, passes through the battery pack cavity 432 to dissipate heat from the battery pack inside the battery pack cavity 432. In other embodiments, a number of battery pack cavities 432 may be adjusted according to actual needs, which is not limited here.

The battery pack cavity 432 is tilted and includes a relatively low first end 4324 and a second end 4325 that is tilted upward from the first end 4324. The motor 41 is arranged below the second end 4325. In other words, the whole power head 40 is tilted to fully accommodate the battery pack cavity 432. At the same time, the tilted arrangement enables an interior of the power head 40 to be more compact and improves space utilization. Moreover, airflow passages may also be arranged through arranging different components in different positions.

The motor 41 includes a motor body 4331 and a second fan 4332. The second fan 4332 is connected with the motor body 4331 and is located below the motor body 4331. The second fan 4332 faces the second air outlet 4316 directly, so that the airflow sinking into the motor 41 can be discharged from the second air outlet 4316 under an action of the second fan 4332.

The second air guiding plate 4352 is connected between the second fan 4332 and the second air outlet 4316, and is used to guide the airflow from the motor 41 to the second air outlet 4316 for discharging.

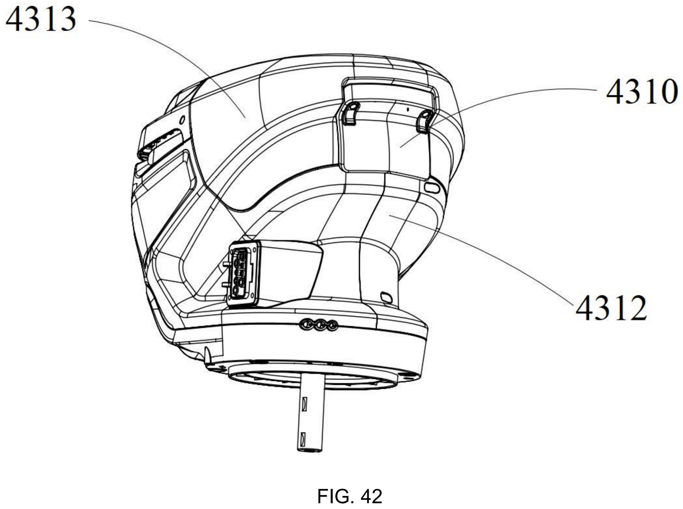

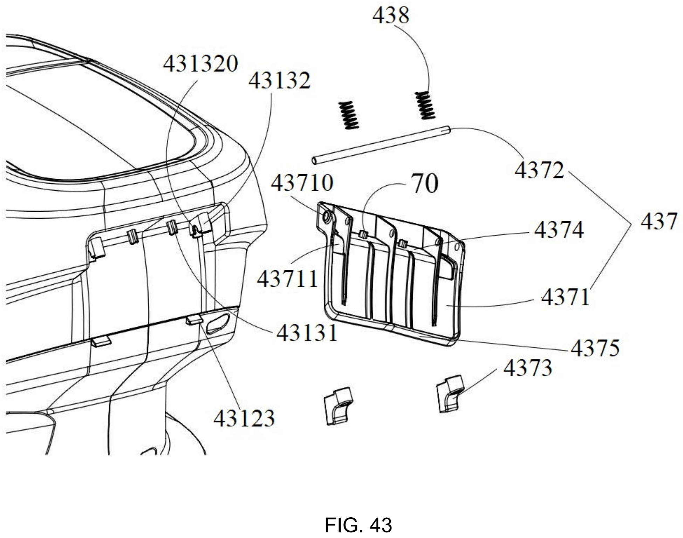

Please refer to FIG. 42 and FIG. 43. The power head 40 further includes a flip cover locking device 4310. The flip cover locking device 4310 includes a flip cover 437 and a second elastic component 438 arranged between the cover 4313 and the flip cover 437 and capable of deforming under an external force. There are two second elastic components 438, and the two second elastic components 438 are spaced apart from each other.

A first end of the flip cover 437 is pivotally connected with the cover 4313, and a second end of the flip cover 437 is connected with a second buckle of the housing 4312. The flip cover 437 has the locked state and an activated state. When the flip cover 437 is in the locked state, the second elastic components 438 are in a free state, the flip cover 437 is clamped and fixed to the housing 4312, and the cover 4313 is in a closed state. When the flip cover 437 is in the activated state, the second elastic components 438 are compressed, and the flip cover 437 is released from the housing 4312 and can rotate relative to the cover 4313, so that the cover 4313 can be opened relative to the housing 4312. In other words, the flip cover 437 is used to lock the cover 4313 and the housing 4312, so that the power head casing 43 is normally kept closed, and the cover 4313 may be opened when necessary to expose an inside of the power head casing 43. When the cover 4313 is opened, the battery pack cavity 432 is exposed for battery pack replacement.

In this embodiment, when the flip cover 437 is in the activated state, the cover 4313 and the housing 4312 are not in contact with each other and can be clearly observed so as to be locked in time.

There is a movable area between the cover 4313 and the flip cover 437. When the flip cover 437 is pushed to move toward the cover 4313, the second elastic components 438 are squeezed and deformed, and the flip cover 437 can rotate relative to the cover 4313. When the flip cover 437 is released, the second elastic components 438 are reset, and the flip cover 437 are reset under an action of a rebound force. The movable area is a distance by which the second elastic components 438 is compressed. In other embodiments, other locking methods may also be selected, such as arranging an extended locking block on the flip cover 437, and switching the flip cover 437 between locked state and the activated state by rotation. In the locked state, the flip cover 437 is fixed on the cover 4313, and the locking block cooperates with the housing 4312 to fix the cover 4313 with the housing 4312. There are no limitation on this.

In this embodiment, an extending area 4374 extending outward is arranged at a top of the flip cover 437. The extending area 4374 serves as a pushing button. When in use, a fingertip is placed on a third cover plate 4371, and the fingertip abuts against the extending area 4374. The extending area 4374 is pushed upward to enable the flip cover 437 to move within the movable area.

The cover 4313 is provided with a limiting block 43131, and the flip cover 437 is provided with a corresponding limiting component 4370. Two ends of the second elastic component 438 are respectively sleeved on the limiting block 43131 and the limiting component 4370, and can deform as the flip cover 437 moves in the movable area. Of course, in other embodiments, the second elastic components 438 can be directly fixed to the housing 4312 and the cover 4313 by screws or other fixing accessories. It is only necessary to ensure that the second elastic components 438 can be compressed/reset within a certain range, which is not limited here.

The flip cover 437 includes the third cover plate 4371 and a connecting shaft 4372 connected with the third cover plate 4371. The third cover plate 4371 is provided with a fifth perforation hole 43710. The connecting shaft 4372 passes through the fifth perforation hole 43710 and is movably connected with the third cover plate 4371, so that the third cover plate 4371 is pivotally connected with the cover 4313 through the connecting shaft 4372.

The cover 4313 is provided with a protruding part 43132 protruding and extending toward the third cover plate 4371. The third cover plate 4371 is provided with a corresponding engaging part 4373. The engaging part 4373 is sleeved on an outer side of the protruding part 43132 to limit the connecting shaft 4372 between the protruding part 43132 and the engaging part 4373. There are two protruding parts 43132, and the two protruding parts 43132 are respectively arranged on two sides of the two second elastic components 438.

The protruding part 43132 is provided with a concave groove 431320 on a side facing the third cover plate 4371. When the engaging part 4373 is sleeved on the outer side of the protruding part 43132, the concave groove 431320 and the engaging part 4373 together form an accommodating cavity, and the connecting shaft 4372 is accommodated in the accommodating cavity. The third cover plate 4371 is provided with an assembling groove 43711, and the engaging part 4373 is accommodated in the assembling groove 43711.

In this embodiment, the engaging part 4373 is an independent component. After the connecting shaft 4372 is placed into the concave groove 431320, the engaging part 4373 passes through the assembling groove 43711 to cooperate with the concave groove 431320, so as to fix the engaging part 4373 to the protruding part 43132 of the cover. Then, the connecting shaft 4372 is fixed in the accommodating cavity to fix the third cover plate 4371 to the cover 4313. The protruding parts 43132 and the engaging part 4373 are each provided with a screw hole respectively. When the protruding parts 43132 and the engaging part 4373 are installed, the two screw holes are aligned with each other, and the protruding parts 43132 and the engaging part 4373 are fixedly connected with each other by a screw passing through the two screw holes. In other embodiments, the engaging part 4373 may also be configured as a preformed component integrally formed with the flip cover 437, so that the flip cover 437 and the cover 4313 are fixed simultaneously when the connecting shaft 4372 is installed.

The housing 4312 is provided with the second buckle 43123 on a side near the cover 4313, and the flip cover 437 is provided with a corresponding buckle component 4375. The second buckle 43123 and the buckle component 4375 cooperate with each other to realize a second buckle connection between the flip cover 437 and the housing 4312.

Please refer to FIG. 41. An outer side of the power head casing 43 is provided with a second installation groove 4318 for accommodating an installation belt 4319. The second installation groove 4318 divides the power head 40 into two parts in the vertical direction. The top of the housing 4312 is provided with a through groove. A first connecting component 4317 located below the installation belt 4319 is used to pass through the through groove and is fixedly connected with the cover 4313. The first connecting component 4317 is generally bent into a crescent shape and is provided with a plurality of second positioning holes 43171. The cover 4313 is provided with a corresponding plurality of preformed posts 43133, and the plurality of the preformed posts 43133 is accommodated in the plurality of second positioning holes 43171 to achieve a fixed connection between the cover 4313 and the first connecting component 4317. In other words, the cover 4313 is fixedly connected with the installation belt 4319 through the first connecting component 4317. The installation belt 4319 covers both the housing 4312 and the cover 4313 at the same time, and the first connecting component 4317 is partially accommodated within the first air guiding plate 4351.

In summary, in the power head 40 of the embodiment, the second air inlet 4315 and the second air outlet 4316 are arranged on the power head casing 43, which allows the airflow to enter the interior of the power head 40 to dissipate heat. At the same time, through arranging the guiding air passage, the first air guiding plate 4351 and the second air guiding plate 4352, the airflow entering the second accommodating cavity 4311 passes through the battery pack cavity 432 and the motor 41, and is discharged from the second air outlet under an action of the guiding air passage, thereby simultaneously dissipating heat from the battery pack and the motor 41.

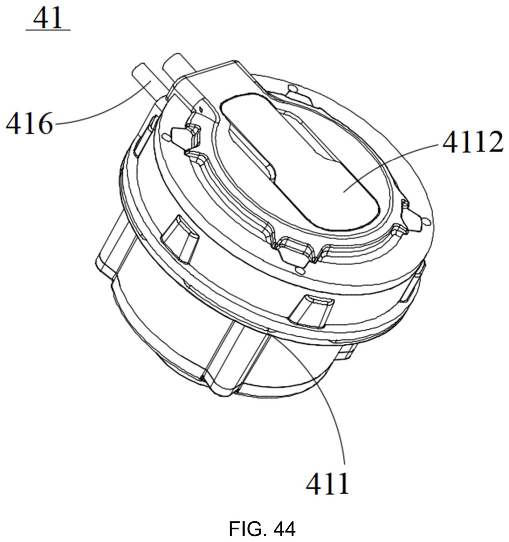

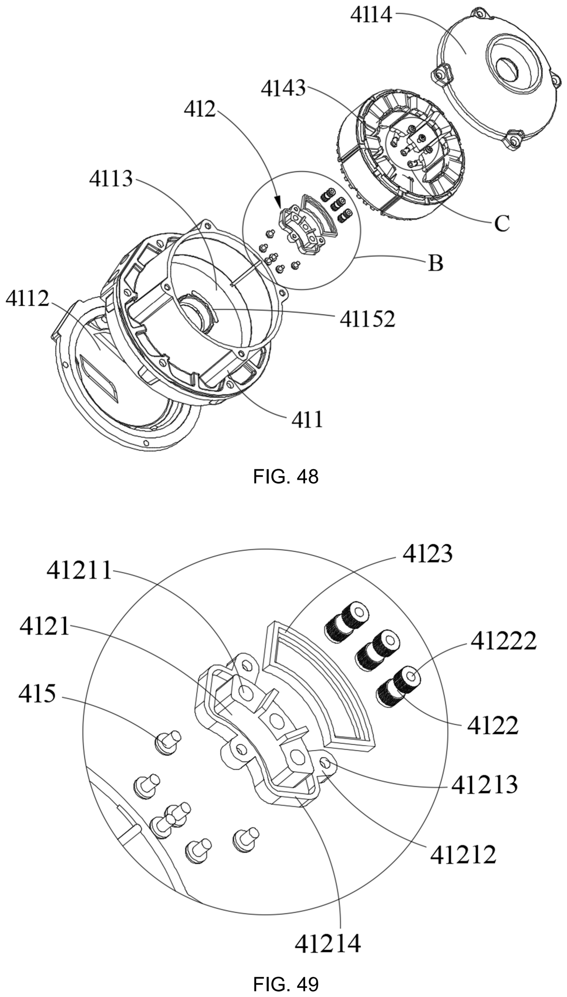

Please refer to FIG. 44, FIG. 45 and FIG. 48. The motor 41 is arranged in the mower for driving the mower to operate. The motor 41 includes a fourth housing 411, a controller 413, a motor body 414, and a connecting device 412. Wherein, the fourth housing 411 is provided with a separating board 4115 to divide an internal space of the fourth housing 411 into a first cavity 4111 and a second cavity 4113. Coolant is arranged in the first cavity 4111, and the controller 413 is accommodated in the first cavity 4111. The controller 413 is cooled by the coolant to improve a cooling effect of the controller 413. The motor body 414 is accommodated in the second cavity 4113. A first end of the connecting device 412 is connected with the controller 413 and a second end of the connecting device 412 is connected with the motor body 414. The controller 413 can be electrically connected with the motor body 414 through the connecting device 412 to control a start or stop of the motor body 414.

The separating board 4115 is integrally formed with the fourth housing 411, which improves a connection strength between the separating board 4115 and the fourth housing 411. At the same time, the first cavity 4111 and the second cavity 4113 are separated by the separating board 4115, which prevents the first cavity 4111 and the second cavity 4113 from communicating at the separating board 4115. This arrangement prevents the coolant in the first cavity 4111 from flowing into the second cavity 4113. On the one hand, it improves a heat dissipation effect of the controller 413, and on the other hand, it prevents the coolant from obstructing a rotation of the motor body 414 and causing damage.

Since the controller 413 is completely immersed in the coolant, the heat generated by the controller 413 is directly transferred to the coolant. Through an alternating flow of hot and cold coolant, the heat is transferred to the fourth housing 411, and then the heat is conducted to an external environment through the fourth housing 411. The coolant mainly transfers the heat of the controller 413. At the same time, since one side surface of the separating board 4115 is in contact with the motor body 414, the heat generated by the motor body 414 can be transferred to a side of the separating board 4115 near the first cavity 4111 and come into contact with the coolant. The coolant then transfers the heat on the separating board 4115 to the fourth housing 411, thereby achieving the heat dissipation for the motor body 414. In this embodiment, the coolant may simultaneously dissipate heat for both the controller 413 and the motor body 414. Since the coolant has a high thermal conductivity, it can improve the heat dissipation effect, enabling both the motor body 414 and the controller 413 to work continuously at high power.

The fourth housing 411 includes a first cover plate 4112, a second cover plate 4114, and a sealing ring. Wherein, the first cover plate 4112 and the second cover plate 4114 are respectively arranged at two ends of the fourth housing 411. The first cover plate 4112 is connected with the fourth housing 411 to seal the controller 413 in the first cavity 4111. The second cover plate 4114 is connected with the fourth housing 411 to restrict the motor body 414 in the second cavity 4113. The first cover plate 4112 and the fourth housing 411, as well as the second cover plate 4114 and the fourth housing 411, are connected and locked together by screws. The sealing ring is arranged between the first cover plate 4112 and the fourth housing 411. The sealing ring is compressed by the first cover plate 4112 and the fourth housing 411 to enable the sealing ring to deform and seal the first cavity 4111. Through arranging the first cover plate 4112 and the sealing ring that sealed with the fourth housing 411, the controller 413 can be installed in the first cavity 4111. The controller 413 and the coolant are sealed in the first cavity 4111 through the first cover plate 4112. This arrangement allows the first cover plate 4112 to be opened to replace or repair the controller 413 or the coolant in case of damage to the controller 413 or deterioration of the coolant, thereby further extending a duration life of the motor 41.

The controller 413 is fixedly connected with the separating board 4115. The coolant fills the first cavity 4111. The heat from the controller 413 and the separating board 4115 is conducted to a surface of the fourth housing 411 through the coolant for heat dissipation. The coolant is heated in the first cavity 4111 and undergoes hot and cold cross-flow to transfer heat from the controller 413 and the separating board 4115 to the fourth housing 411. The coolant fills the first cavity 4111 and will not flow out of the first cavity 4111 to an outside of the fourth housing 411 or flow in from the outside of the fourth housing 411 to the first cavity 4111, thereby improving a sealing performance of the first cavity 4111 and simplifying a structure of the motor 41. The coolant has insulating properties, which prevents an electrical conduction between different electronic components on the controller 413 through the coolant that may damage the controller 413.

In one embodiment, the coolant is accommodated in the first cavity 4111 and does not circulate with external devices, thereby improving the sealing performance of the first cavity 4111 and simplifying the structure of the motor 41. In other embodiments, a circulation structure may also be arranged on an outer side of the fourth housing 411 to allow the coolant in the first cavity 4111 to circulate, thereby improving cooling efficiency. A specific structure and connection method of the circulation structure may be designed according to conventional technology and are not limited here.

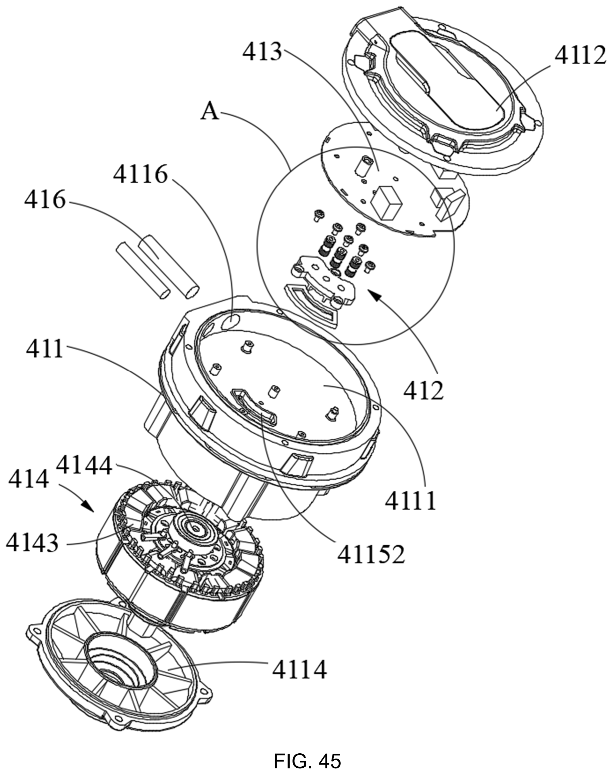

Please refer to FIG. 45 through FIG. 47. The separating board 4115 is provided with a locking post 41153 extending toward the first cavity 4111. The motor 41 includes a second fixing component 415. The controller 413 is fixedly connected with the locking post 41153 through the second fixing component 415. The locking post 41153 is cylindrical and is provided with a second locking hole 41154. A corresponding hole is opened on the controller 413, so that the second fixing component 415 can pass through the controller 413 and be accommodated in the second locking hole 41154 to fix the controller 413 on the locking post 41153. The second fixing component 415 is a screw, and the second locking hole 41154 is a screw hole.

Instead of opening the second locking hole 41154 on part of the locking post 41153, a positioning post 41155 is arranged on the locking post 41153. When the controller 413 and the separating board 4115 are assembled, the positioning post 41155 extends into a hole opened on the controller 413 to achieve a positioning of the controller 413, thereby improving assembly accuracy of the controller 413 and the separating board 4115.

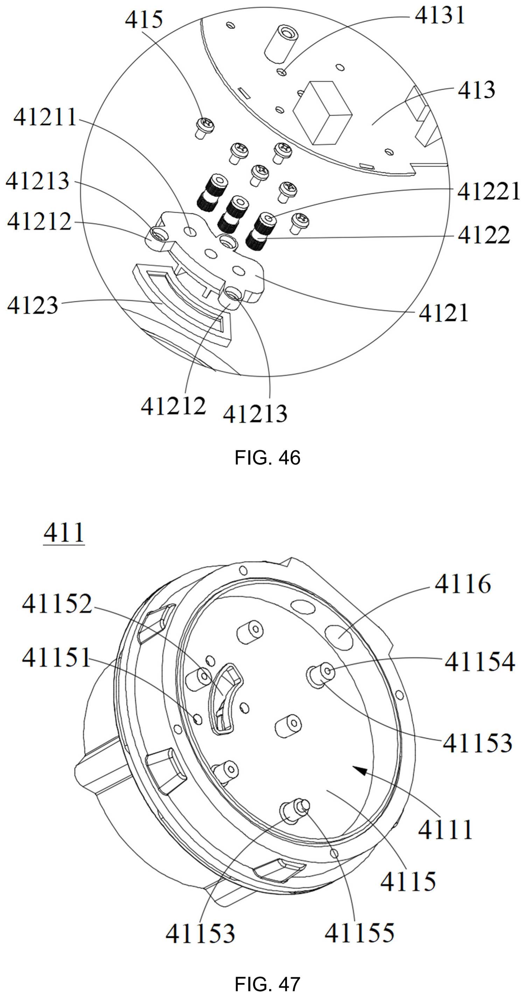

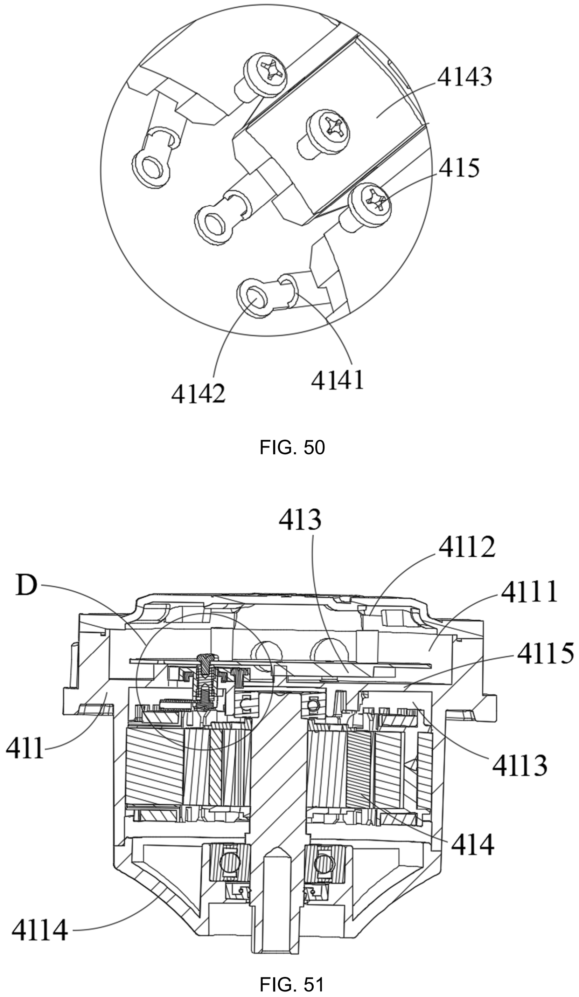

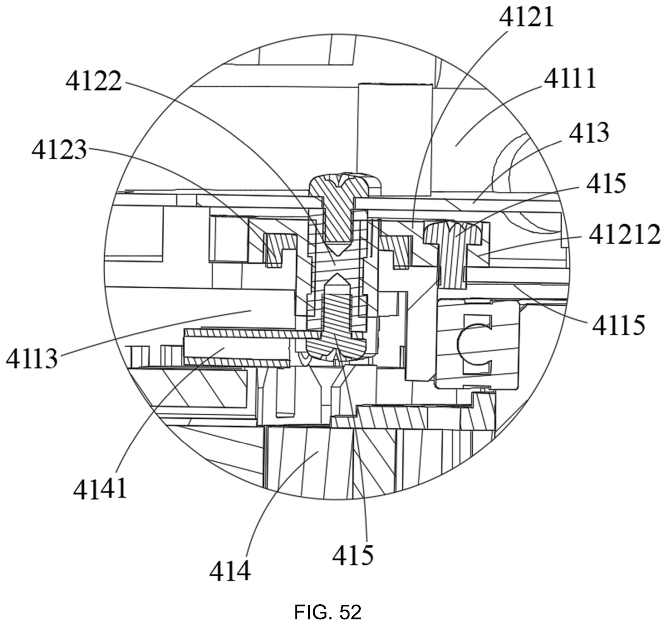

Please refer to FIG. 46 through FIG. 49 combined with FIG. 51 and FIG. 52. The separating board 4115 is provided with a connecting hole 41152. The connecting device 412 includes a second connecting component 4121 and a second sealing component 4123. The second connecting component 4121 is accommodated in the connecting hole 41152, and two ends of the second connecting component 4121 are electrically connected with the motor body 414 and the controller 413 respectively. The second sealing component 4123 is arranged between the second connecting component 4121 and the separating board 4115. The second connecting component 4121 is accommodated in the connecting hole 41152, with two ends of the second connecting component 4121 respectively accommodated in the first cavity 4111 and the second cavity 4113. One end of the second connecting component 4121 is provided with a limiting part 41214, and the limiting part 41214 protrudes upward from a periphery of the second connecting component 4121 and can cover the connecting hole 41152. The second sealing component 4123 is sleeved on the second connecting component 4121 and placed between the limiting part 41214 and the separating board 4115 to seal the connecting hole 41152 and prevent the coolant in the first cavity 4111 from flowing into the second cavity 4113. The limiting part 41214 is arranged in the first cavity 4111, and the second sealing component 4123 is also arranged in the first cavity 4111. In other embodiments, the limiting part 41214 and the second sealing component 4123 may also be arranged in the second cavity 4113, as long as a function of sealing the connecting hole 41152 can be achieved, it is not limited here.

The connecting device 412 further includes a conductive component 4122. The second connecting component 4121 is provided with a conductive hole 41211. The conductive component 4122 is accommodated in the conductive hole 41211, and two ends of the conductive component 4122 are electrically connected with the controller 413 and the motor body 414, respectively. The conductive component 4122 is in a long strip-shaped, and two ends of the conductive component 4122 extend from the conductive hole 41211 to be electrically connected with the controller 413 and the motor body 414 respectively, so that the controller 413 can supply power to the motor body 414 to control the start or stop of the motor body 414. And at the same time a rotating speed of the motor body 414 is controlled. A shape and size of the conductive hole 41211 are the same as those of the conductive component 4122, so that the conductive component 4122 is accommodated in the conductive hole 41211 and the conductive hole 41211 is sealed to prevent the coolant in the first cavity 4111 from flowing to the second cavity 4113.

In one embodiment, the conductive component 4122 is a metal product, and the second connecting component 4121 is a plastic product. The conductive component 4122 and the second connecting component 4121 are integrally molded, which means that when producing the second connecting component 4121, the conductive component 4122 is directly injection molded into the second connecting component 4121 to achieve a seal between the conductive component 4122 and the second connecting component 4121. Of course, in other embodiments, the conductive component 4122 may be installed on the second connecting component 4121 through a conductive hole 41211. At this time, a sealing structure may be arranged between the conductive component 4122 and the second connecting component 4121. Alternatively, the conductive component 4122 and the second connecting component 4121 may be connected by sealant. Alternatively, the conductive component 4122 may be omitted, and the second connecting component 4121 may be made of metal material, which can also achieve an electrical connection between the controller 413 and the motor body 414, which is not limited here.

There are three conductive components 4122 and they are arranged in a cylindrical shape to correspond to three wires of three-phase AC power respectively. There are three conductive holes 41211 correspondingly. The conductive holes 41211 are evenly distributed on the second connecting component 4121 to avoid breakdown between the three-phase AC power. In other embodiments, when the motor body 414 uses DC power, there may also be one or two conductive components 4122 to transmit positive and negative currents, or only positive currents, and a grounding wire is arranged on the motor body 414 to transmit negative currents, which is not limited here.

Please refer to FIG. 46, FIG. 49 and FIG. 50 combined with FIG. 51 and FIG. 52. A first end of the conductive component 4122 is fixedly connected with the controller 413. The motor body 414 includes a wiring terminal 4141, and a second end of the conductive component 4122 is connected with the motor body 414 through the wiring terminal 4141. The conductive component 4122 is arranged at one end of the first cavity 4111 and can abut against the controller 413, so that the controller 413 is electrically connected with the conductive component 4122 to supply power to the conductive component 4122. The motor body 414 includes a stator 4143 and a rotor 4144. The rotor 4144 is accommodated in the stator 4143. The wiring terminal 4141 is electrically connected with the stator 4143, so that the controller 413 can supply power to the stator 4143 through the wiring terminal 4141, thereby driving the rotor 4144 to rotate and output power to the outside.

In this embodiment, the conductive component 4122 is arranged at one end of the first cavity 4111 and is provided with a first wiring hole 41221. The controller 413 is correspondingly provided with a first wiring passing hole 4131. The motor 41 includes the second fixing component 415, and the second fixing component 415 passes through the first wiring passing hole 4131 and is accommodated in the first wiring hole 41221 to fix the conductive component 4122 and the controller 413, so that the controller 413 can supply power to the conductive component 4122. Of course, in other embodiments, the conductive component 4122 and the controller 413 can be directly welded together so that the controller 413 can supply power to the conductive component 4122, which is not limited here.

One end of the conductive component 4122 arranged in the second cavity 4113 is provided with a second wiring hole 41222. A first end of the wiring terminal 4141 is connected with a coil in the stator 4143, and a second end of the wiring terminal 4141 is provided with a second wiring passing hole 4142. The second fixing component 415 passes through the second wiring passing hole 4142 and is accommodated in the second wiring hole 41222 to install the wiring terminal 4141 on the conductive component 4122, thereby realizing an electrical connection between the conductive component 4122 and the wiring terminal 4141, and then realizing an electrical connection between the conductive component 4122 and the stator 4143, so that the controller 413 supplies power to the stator 4143, thereby driving the rotor 4144 to rotate. In other embodiments, the conductive component 4122 may also be welded to the wiring terminal 4141, which is not limited here.

Please refer to FIG. 46 and FIG. 47. The second connecting component 4121 is provided with a fixing part 41212 and a fixing hole 41213 opened on the fixing part 41212. The separating board 4115 is provided with a groove hole 41151, ang the groove hole 41151 corresponds to the fixing hole 41213. The second fixing component 415 passes through the fixing hole 41213 and is accommodated in the groove hole 41151 to connect the second connecting component 4121 with the separating board 4115. Wherein, the fixing part 41212 extends outward from an outer peripheral edge of the second connecting component 4121. There are three fixing parts 41212, and the three fixing parts 41212 are evenly distributed on an outer edge of the second connecting component 4121. There are three corresponding groove holes 41151, and the three groove holes 41151 are blind holes. The groove holes 41151 are arranged on a side of the separating board 4115 facing the first cavity 4111, the fixing part 41212 extends outward from the limiting part 41214, and the fixing hole 41213 is arranged in a middle position of the fixing part 41212. The second fixing component 415 is a screw, and the groove hole 41151 is provided with threads that engage with the screw.

In this embodiment, the groove holes 41151 are arranged on the side of the separating board 4115 facing the first cavity 4111, and the fixing hole 41213 is arranged on the fixing part 41212. There are three fixing parts 41212 and three fixing holes 41213. In other embodiments, the groove hole 41151 may be arranged on a side of the separating board 4115 facing the second cavity 4113, and the fixing hole 41213 may be arranged on the limiting part 41214. A number of fixing holes 41213 may be two, five or other numbers. A number of groove holes 41151 corresponds to the number of fixing holes 41213, which is not limited here.

Please refer to FIG. 45. The fourth housing 411 is further provided with a through wiring hole 4116. The motor 41 includes a cable 416 and a sealing strip. The cable 416 passes through the through wiring hole 4116 and is electrically connected with the controller 413 to supply power to the controller 413. The through wiring hole 4116 is arranged on a side wall of the fourth housing 411. The sealing strip is arranged between the cable 416 and the fourth housing 411 to achieve a sealing connection between the cable 416 and the fourth housing 411. Of course, the through wiring hole 4116 may also be arranged on the first cover plate 4112, and the cable 416 passes through the first cover plate 4112 to supply power to the controller 413, which is not limited here.

In summary, the motor 41 of the disclosure reduces a space occupied by the motor body 414 and the controller 413 by accommodating the controller 413 in the first cavity 4111 and accommodating the motor body 414 in the second cavity 4113, thus enabling the motor 41 to be applied to smaller products. Through arranging the coolant in the first cavity 4111, the controller 413 dissipates heat outward through the coolant, which improves heat dissipation efficiency of the controller 413. And through connecting the controller 413 with the motor body 414 through the connecting device 412, a connection method is simple and convenient. The second connecting component 4121 is sealed to the separating board 4115 through arranging the second sealing component 4123 between the second connecting component 4121 and the separating board 4115, thus preventing the coolant in the first cavity 4111 from flowing to the second cavity 4113. The controller 413 is electrically connected with the motor body 414 through arranging the conductive component 4122 on the second connecting component 4121. The controller 413 controls a current of the motor body 414, thereby enabling the controller 413 to control an start, stop or rotating speed of the motor body 414.

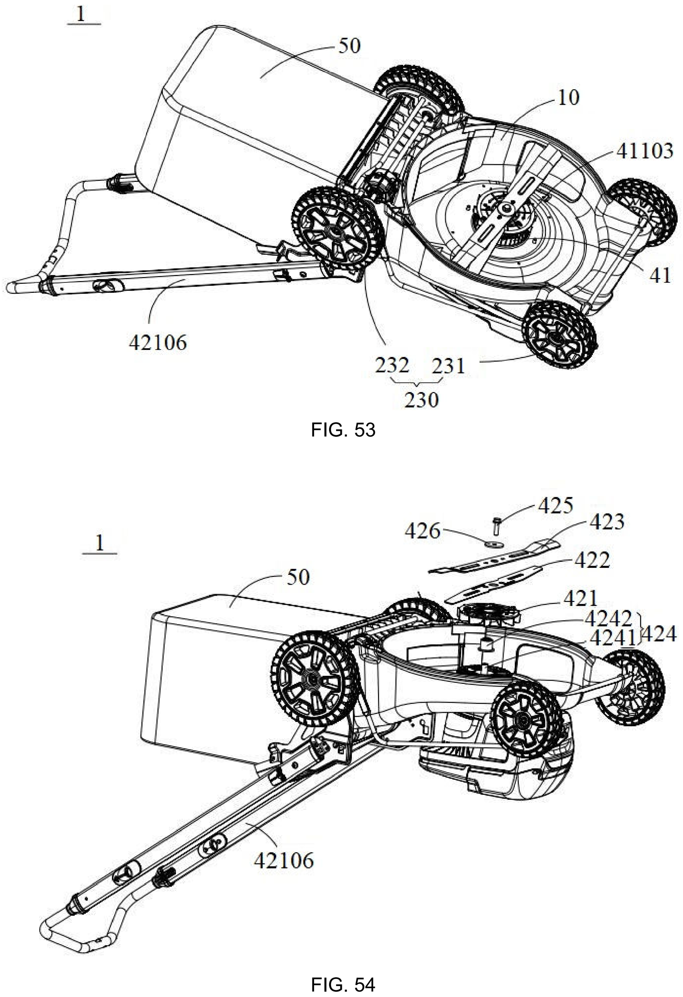

Please refer to FIG. 53 through FIG. 54. The mower 1 includes the casing 10, the motor 41, a blade fixing structure 42103, the lawn collection box 50, the walking assembly 230 and an operation assembly 42106.

The blade fixing structure 42103 is located in the casing 10. The blade fixing structure 42103 includes a third connecting component 421, a first blade 422 and a second blade 423. The first blade 422 and the second blade 423 are fixedly connected with the third connecting component 421. This embodiment uses a dual-blade as an example, but in other embodiments, only one single blade may also be used, which is not limited here. The motor 41 is partially accommodated in the casing 10. The motor 41 includes a motor output shaft assembly 424. The third connecting component 421 is interference-fitted with the motor output shaft assembly 424 and is driven by friction. Thus, when the first blade 422 or the second blade 423 is impacted by an external force, at this time the first blade 422 or the second blade 423 may rotate radially relative to the motor output shaft assembly 424 along with the third connecting component 421, which acts as a buffer for the motor output shaft assembly 424 and protects an entire system.

The lawn collection box 50 is connected with the casing 10 and is used to collect weeds cut by the blade fixing structure 42103. The walking assembly 230 is used to support the mower 1 to rotate relative to the ground, so that the operator may easily push the mower 1 to mow. The walking assembly 230 includes a pair of front walking wheels 231 and a pair of rear walking wheels 232. The operation assembly 42106 is a pushing rod extending upwards from a rear of the mower 1.

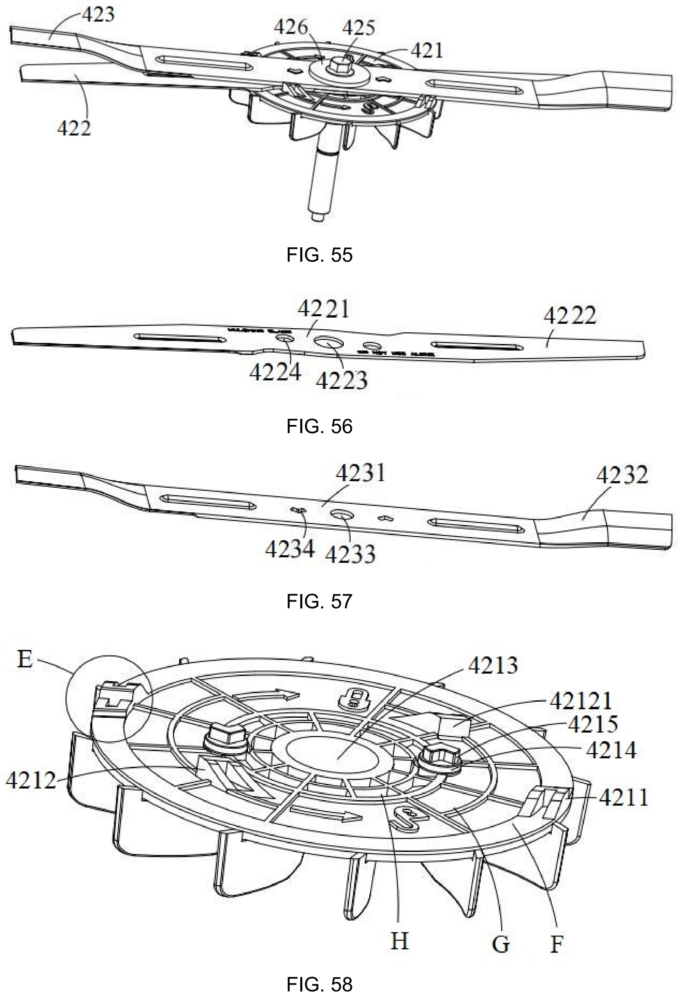

Please refer to FIG. 55 through FIG. 57. The first blade 422 includes a first middle part 4221 arranged in a flat plate shape and a first cutting part 4222 arranged at each end of the first middle part 4221. The first middle part 4221 is elongated and is used to be installed to the third connecting component 421. The first cutting part 4222 is provided with a first cutting edge at one end facing a blade rotating direction for cutting grass blades, and a width of the first cutting part 4222 at the other end away the blade rotating direction gradually decreases. The first blade 422 is provided with a first matching hole 4223 that penetrates through the first blade 422 and is located at a center. Two sides of the first matching hole 4223 are each provided with a third positioning hole 4224 that penetrates through the first blade 422.

To achieve better mowing results and facilitate differentiation, the second blade 423 differs from the first blade 422 in shape and structure. The second blade 423 includes a second middle part 4231 arranged in the flat plate shape and a second cutting part 4231 arranged at each end of the second middle part 4231. The second middle part 4231 is a long and narrow rectangle and is used to be installed to the third connecting component 421. The second cutting part 4231 is twisted relative to the second middle part 4231. An end of the second cutting part 4231 facing a blade rotating direction is provided with a second cutting edge for mowing. The second blade 423 is provided with a second matching hole 4233 that penetrates through the second blade 423 and is located at a center. Two sides of the second matching hole 4233 are each provided with a fourth positioning hole 4234 that penetrates through the second blade 423. This fourth positioning hole 4234 may be an arrow shaped hole with a foolproof function. The two arrow shaped holes point in opposite directions, so that if the second blade 423 is reversed, it cannot be assembled, and a reverse assembly may be avoided. The arrow shaped hole points to the blade rotating direction of the second blade 423 in a circumferential direction, and the two arrow shaped holes are central symmetrical with a center of the second matching hole 4233.

In this embodiment, the first blade 41 and the second blade 42 are stacked and offset vertically. When cutting, the first blade 422 first cuts the lawn, and then the second blade 423 cuts the lawn again, so that a better lawn crushing effect may be achieved. A size of the first matching hole 4223 of the first blade 422 is larger than a size of the second matching hole 4233 of the second blade 423, and a size of the third positioning hole 4224 of the first blade 422 is larger than a size of the fourth positioning hole 4234 of the second blade 423.

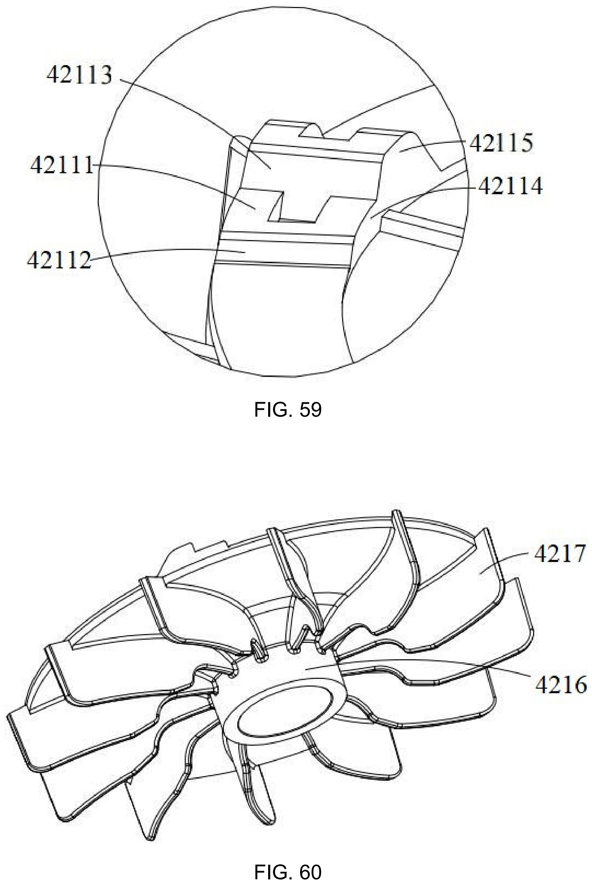

Please refer to FIG. 58 through FIG. 60. The third connecting component 421 is arranged in a disc shape. A first surrounding area F near an edge and a second surrounding area G located inside the first surrounding area F are formed on the third connecting component 421. A rotation indicator is arranged in the second surrounding area G. The third connecting component 421 is provided with a first limiting boss 4211 and a second limiting boss 4212, the first limiting boss 4211 is located in the first surrounding area F and the second limiting boss 4212 is located in the second surrounding area G. The first blade 422 and the second blade 423 are both limited between the first limiting boss 4211 and the second limiting boss 4212, so that the first blade 422 and the second blade 423 are fixedly connected with the third connecting component 421 in a radial direction of the third connecting component 421.

The first limiting boss 4211 is in a step-shaped and is provided with a supporting surface 42111 and a first blocking surface 42112 and a second blocking surface 42113 located on two sides of the supporting surface 42111. The first blocking surface 42112 and the second blocking surface 42113 are both perpendicular to the supporting surface 42111, and the first blocking surface 42112 and the second blocking surface 42113 are arranged vertically. The second limiting boss 4212 is provided with a third blocking surface 42121 extending in the vertical direction. The first blade 422 is limited between the first blocking surface 42112 and the third blocking surface 42121. The second blade 423 is supported on the supporting surface 42111 and limited between the second blocking surface 42113 and the third blocking surface 42121.

The first limiting boss 4211 includes a first step part 42114 protruding outward from the third connecting component 421 and a second step part 42115 protruding outward from a tail end of the first step part 42114. The first blocking surface 42112 is formed at a connection between the first step part 42114 and the third connecting component 421, and the second blocking surface 42113 is formed at a connection between the first step part 42114 and the second step part 42115.

In this embodiment, there are two first limiting boss 4211, and the two first limiting bosses 4211 are arranged symmetrically in the first surrounding area F. There are also two second limiting bosses 4212, and the two second limiting bosses 4212 are arranged symmetrically in the second surrounding area G. The two first cutting parts 4222 of the first blade 422 may be limited, and the two second cutting parts 4231 of the second blade 423 may also be limited, so that the first blade 422 and the second blade 423 are fixedly connected with the third connecting component 421 in the radial direction of the third connecting component 421.

The third connecting component 421 is provided with a third installation hole 4213 at a center position of the third connecting component 421, and the third installation hole 4213 passes through the third connecting component 421. In this embodiment, the third connecting component 421 is further provided with a first positioning boss 4214 and a second positioning boss 4215 extending outward from the first positioning boss 4214. The first positioning boss 4214 is located beside the third installation hole 4213. The first positioning boss 4214 is matched with the third positioning hole 4224, and the second positioning boss 4215 is matched with the fourth positioning hole 4234, thereby enabling a fixation between the first blade 422 and the second blade 423.

The third connecting component 421 is further provided with a third surrounding area H located inside the second surrounding area G, and the first positioning boss 4214 and the second positioning boss 4215 are both located in the third surrounding area H. The third connecting component 421 is divided into three annular areas from an outside inwards. The first limiting boss 4211 is located in an outermost annular area, the second limiting boss 4212 is located in a middle annular area, and the first positioning boss 4214 is located in an innermost annular area. When assembling the first blade 422 and the second blade 423, the first limiting boss 4211, the second limiting boss 4212, and the first positioning boss 4214 may be used to position and limit the first blade 422 and the second blade 423 at different positions, which further ensures an assembling stability of the first blade 422, the second blade 423, and the third connecting component 421.

The second positioning boss 4215 is an arrow shaped boss with a foolproof design. The arrow shaped boss points in a direction of rotation of the second blade 423. There are two second positioning bosses 4215 and two first positioning bosses 4214, the two second positioning bosses 4215 are arranged symmetrically with respect to the third installation hole 4213, and the two first positioning bosses 4214 are arranged symmetrically with respect to the third installation hole 4213. A projection outline of the second positioning boss 4215 on the third connecting component 421 is located within a projection outline of the first positioning boss 4214 on the third connecting component 421. A height of the first positioning boss 4214 is consistent with a height of the supporting surface 42111, thereby ensuring that the second blade 423 is stably supported on the supporting surface 42111.

A second fixing post 4216 is arranged on a side of the third connecting component 421 away to the first blade 422. The third installation hole 4213 passes through the second fixing post 4216. The third connecting component 421 is further provided with a plurality of fan blades 4217 arranged around the second fixing post 4216. The fan blades 4217 are integrally formed with the second fixing post 4216 and the third connecting component 421. When the mower 1 is working, the fan blades 4217 may dissipate heat for the whole mower.

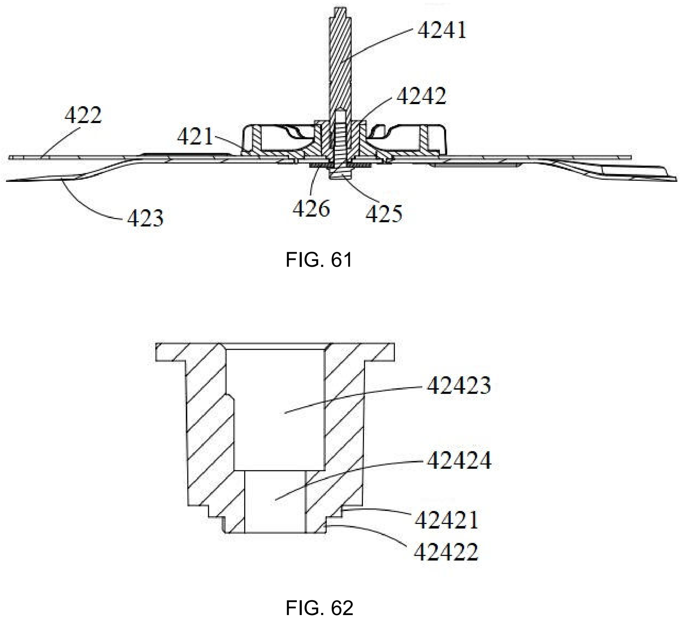

Please refer to FIG. 61 through FIG. 62. In this embodiment, the motor output shaft assembly 424 includes an output shaft 4241 and a shaft sleeve 4242 sleeved on the output shaft 4241. The output shaft 4241 and the shaft sleeve 4242 are fixedly fitted with each other, and the shaft sleeve 4242 is interference-fitted with the third connecting component 421. Thus, the mower 1 may transmit torque by relying on a friction between the third connecting component 421 and the shaft sleeve 4242. When the mower 1 is working and the blade is hit by an external impact, the blade will rotate radially relative to the shaft sleeve 4242 along with the third connecting component 421 at this time. The shaft sleeve 4242 is accommodated in the second fixing post 4216 and passes through the third connecting component 421. The shaft sleeve 4242 is provided with a first installation deck 42421 and a second installation deck 42422. The first installation deck 42421 is matched with the first matching hole 4223. The second installation deck 42422 is matched with the second matching hole 4233. The first blade 422 is installed on the first installation deck 42421, and the second blade 423 is installed on the second installation deck 42422.

The blade fixing structure 42103 also includes a fastener 5, and the fastener 5 is connected with the motor output shaft assembly 424. A coaxial first aperture section 42423 and a second aperture section 42424 with decreasing diameters are arranged inside the shaft sleeve 4242. The first aperture section 42423 cooperates with the output shaft 4241, and the second aperture section 42424 allows the fastener 5 to pass through. A gasket 426 is arranged between the fastener 5 and the second blade 423 to fasten the first blade 422, the second blade 423 and the third connecting component 421 to the shaft sleeve of the motor output shaft assembly 424.

In summary, this disclosure achieves a fixation through arranging the boss on the third connecting component 421 and installing the blade in cooperation with the boss. The third connecting component 421 and the motor output shaft assembly 424 are connected by an interference fit. Thus, when the mower 1 is working, if the blade is impacted by the outside, the blade will rotate relative to the motor output shaft assembly 424 along with the third connecting component 421, which plays a buffering role on the motor output shaft assembly 424 and protects a whole machine system.

The above embodiments are only used to illustrate technical solutions of the disclosure and are not intended to limit it. Although the disclosure has been described in detail with reference to preferred embodiments, those skilled in the art should understand that modifications or equivalent substitutions may be made to the technical solutions of the disclosure without departing from a spirit and scope of the technical solutions of the disclosure.

## Claims

1. A mower, having a lawn mulching mode and a lawn collection mode, comprising:
a casing provided with a cutting cavity and a connecting port;
a door assembly pivotally connected with the casing, when the door assembly being in an open position, the cutting cavity connected with the connecting port, the mower being in the lawn collection mode, and when the door assembly being in a closed position, the connecting port being closed, and the mower being in the lawn mulching mode; and
a knob assembly connected with the door assembly and capable of driving the door assembly to move;
wherein, the knob assembly further comprises a locking component with a locked state and an activated state,
when the locking component is in the locked state, the knob assembly is non-rotatable,
when the locking component is in the activated state, the knob assembly is rotatable, and
a rotating axis of the locking component is substantially perpendicular to a rotating axis of the knob assembly.

2. The mower according to claim 1, wherein, the knob assembly comprises a knob base and a knob cover,
a first end of the locking component is accommodated in an accommodating cavity between the knob base and the knob cover, a second end of the locking component abuts against an outer wall surface of the casing and is rotatable along the outer wall surface,
the outer wall surface of the casing is provided with at least two locking grooves on a rotation path of the locking component,
when the second end of the locking component is accommodated in one of the at least two locking grooves, the locking component is in the locked state, the knob assembly is non-rotatable; and
when the knob cover is pressed, the first end of the locking component moves toward the knob base, the second end of the locking component disengages from the one of the at least the two locking grooves, the locking component is in the activated state, and the knob assembly is rotatable.

3. The mower according to claim 2, wherein, the locking component is substantially V-shaped and comprises a first locking arm, a second locking arm, and a connecting arm connecting the first locking arm with the second locking arm, the first locking arm is accommodated in the accommodating cavity and abuts against the knob cover, the connecting arm is connected with the knob base through a rotating shaft, and the second locking arm is accommodated in the one of the at least the two locking grooves.

4. The mower according to claim 3, wherein, the knob assembly further comprises an elastic component arranged in the accommodating cavity, in a vertical direction, the first locking arm is clamped by the knob cover and the elastic component, when the knob cover is pressed, the first locking arm is pushed to compress the elastic component, the second locking arm tilts upward to be disengaged from the one of the at least the two locking grooves, the knob assembly is in a rotatable state, and after a pressure is released, the elastic component drives the first locking arm to reset, the second locking arm is accommodated in the one of the at least the two locking grooves, and the knob assembly is in the locked state.

5. The mower according to claim 4, wherein, an inner side wall of the knob cover is provided with a positioning strip protruding toward the first locking arm, a side of the first locking arm facing the knob cover is correspondingly concave to define a positioning groove, and the positioning strip extends into the positioning groove and abuts against the first locking arm in real time.

6. The mower according to claim 2, wherein, the knob base is provided with a positioning part at an end away from the locking groove and a positioning shaft passing through the positioning part, the knob cover is provided with an accommodating groove to accommodate the positioning part, a fourth perforation hole is opened on a side wall of the knob cover, and the fourth perforation hole is communicated with the accommodating groove to allow the positioning shaft to pass through, so that the knob cover is rotatably connected with the knob base.

7. The mower according to claim 6, wherein, the casing is provided with a passing hole for the door assembly to pass through, and the door assembly passes through the passing hole and is fixedly connected with the knob assembly so as to rotate synchronously with the knob assembly.

8. The mower according to claim 7, wherein, the door assembly comprises a transmission shaft and a stop block connected with the transmission shaft, and the transmission shaft passes through the passing hole and is fixedly connected with the knob assembly.

9. The mower according to claim 8, wherein, the mower further comprises a guiding plate fixedly connected with the casing, the guiding plate is provided with a guiding surface and a through hole, the guiding surface is accommodated inside the casing, the through hole is exposed outside the casing, and the transmission shaft passes through the through hole and is rotatable along the guiding surface.

10. The mower according to claim 9, wherein, the casing is further provided with a first positioning block fixedly connected with the guiding plate, a first end of the transmission shaft passes through the through hole to be exposed outside the casing, and a second end of the transmission shaft is fixedly connected with the first positioning block to realize a fixed connection between the door assembly and the casing.

11. The mower according to claim 1, wherein, an opening is arranged at a bottom of the casing to form a cutting cavity, the connecting port is arranged on a side wall of the casing, the casing is further provided with a lawn collection channel communicated with the connecting port, and the mower further comprises:
a cutting assembly, the cutting assembly accommodated in the cutting cavity and capable of rotating in the cutting cavity; and
a lawn collection bag, the lawn collection bag detachably fixed to a rear side of the casing and communicated with the cutting cavity through the lawn collection channel and the connecting port;
wherein, the door assembly is provided with a first curved surface and a second curved surface on a side facing the cutting assembly, when the door assembly blocks the connecting port, the first curved surface is coplanar with an inner wall surface of the cutting cavity and the first curved surface and the cutting cavity together define a cavity passage for the cutting assembly to rotate, so as to enable lawn clippings cut by the cutting assembly to be discharged from the bottom of the casing, when the door assembly rotates to expose the connecting port, the second curved surface is located in the lawn collection channel and is coplanar with an inner wall surface of the lawn collection channel, so as to enable the lawn clippings cut by the cutting assembly to be guided into the lawn collection bag through the connecting port, the second curved surface and the lawn collection channel.

12. The mower according to claim 11, wherein, the first curved surface and the second curved surface are vertically offset, and at least one end of the first curved surface and the second curved surface share a common edge.

13. The mower according to claim 11, wherein, the first curved surface is an arc surface, and a radius of curvature of the first curved surface is the same as a radius of curvature of an inner wall surface of the cutting cavity, and the second curved surface is a single curved surface.

14. The mower according to claim 11, wherein, in a vertical direction, the first curved surface is at a same height as the cutting assembly, and the second curved surface is located above the cutting assembly.

15. The mower according to claim 14, wherein, in the vertical direction, a height of the first curved surface is one-fifth to one-quarter of a height of the second curved surface.
